# EUROPEAN PATENT SPECIFICATION

(11) **EP 2 975 746 B1**
(45) Date of publication and mention of the grant of the patent: **20.11.2019**
(21) Application number: 14763018.0
(22) Date of filing: 27.02.2014
(51) Int. Cl.: H02K 41/03, H02K 1/24, H02K 1/27, H02K 7/08

(54) **LINEAR MOTOR**
LINEARMOTOR
MOTEUR LINÉAIRE

(30) Priority: 13.03.2013 JP 2013050214; 13.03.2013 JP 2013050294
(43) Date of publication of application: 20.01.2016
(73) Proprietor: Sinfonia Technology Co., Ltd., Tokyo 105-8564 (JP)
(72) Inventor: KOSAKI, Mamoru, Tokyo 105-8564 (JP); FUJIWARA, Takashi, Tokyo 105-8564 (JP); NEMOTO, Tatsuya, Tokyo 105-8564 (JP); ISHIDA, Taisuke, Tokyo 105-8564 (JP); ARUGA,Nobuo, Tokyo 105-8564 (JP)
(74) Representative: Hinkelmann, Klaus
(86) International application number: PCT/JP2014/054805
(87) International publication number: WO 2014/141887

(56) References cited:
- WO-A1-95/12914
- WO-A1-2007/116505
- WO-A1-2011/155022
- JP-A- 2006 211 812
- JP-A- 2006 238 540
- JP-A- 2009 038 869
- JP-A- 2009 171 660
- JP-A- 2010 094 001
- JP-A- 2011 217 534
- JP-B1- 5 398 938
- US-A- 3 784 850
- US-A- 4 922 143
- US-A1- 2009 127 410
- US-A1- 2010 052 439

## Description

### TECHNICAL FIELD

The present invention relates to a linear motor.

### BACKGROUND ART

Conventionally, linear motors of various modes exhibiting high positioning accuracy and high wear resistance are known as motors used for various purposes, such as for conveying semiconductor-related items in a clean environment.

As a linear motor capable of providing greater thrust while being of a similar size as compared to a typical linear motor using a magnetic circuit, the following linear motor is known. This linear motor includes: a plate-like movable element as a secondary side member movable in a linear direction; and stators as primary side magnetic field generating members respectively opposing to the front surface and back surface of the movable element, wherein teeth made of magnet or iron core (magnetic pole teeth) are formed at the respective opposing surfaces (see Patent Literature 1). In this manner, since the movable element is structured as the secondary side member, the movable element does not require a magnet, a coil, or even an electrical connection part and hence can achieve a weight reduction. Accordingly, the movable element can be moved at further higher speeds.

Further, in order to provide a linear motor including a movable element having thinned magnetic pole teeth and with which loss due to leakage fluxes is reduced, the applicant of the present invention has devised and applied for a patent of a linear motor including: stators as primary side magnetic field generating members; and a movable element as a secondary side member. The movable element made up of a plurality of magnetic pole teeth disposed at a prescribed pitch in a movement direction of the movable element and a resin-made coupling part coupling the teeth is disposed at a position interposed between the two stators. In the movable element, a portion being interposed between the stators is formed to be plate-like (see Patent Literature 2).

### CITATION LIST

### PATENT LITERATURE

Patent Literature 1: JP 2010-130892 A
Patent Literature 2: JP 2012-210011 A

US 4 922 143 A discloses a linear unit comprising a carriage; a holder, said carriage being guided longitudinally displaceably in said holder; and an electromagnetically operated linear motor including two mutually opposite stators and a rotor connected to the carriage and arranged in a pole gap between said two mutually opposite stators, said rotor including a strip having a tooth structure consisting of magnetic metal, said stators having guide surfaces bounding said pole gap, said strip being flexible and fixed self-supportingly on the carriage only at two ends thereof and guided on both sides on said surfaces of the stators.

US 2010/052439 A1 discloses a rotary reluctance motor comprising: a set of inner disks each having an inner diameter root, an outer diameter free end, and a plurality of alternating high permeability teeth and low permeability material segments; a set of outer disks interleaved with the inner disks to form a disk stack, each outer disk having an outer diameter root, an inner diameter free end, and a plurality of alternating high permeability teeth and low permeability material segments, wherein the inner and outer disks arc configured to bear against and support each other in response to axial magnetic forces; flux return portions disposed axially adjacent the disks at each end of the disk slack; and a coil associated with the roots of one of the sets of disks configured to provide axial flux through the disk stack to rotate one set of disks with respect to the other set of disks.

US 3 784 850 A discloses an electric pulse motor comprising: a single rotor having a rotor shall and a plurality of radially extending rotor teeth spaced at equal tooth pitch on a hub which is formed unitary with said rotor teeth and is mounted on the rotor shaft, said rotor further having supporting members, each of which is disposed between adjacent rotor teeth for providing a physical connection between said adjacent rotor teeth; side plate means comprising a pair of plates; bearing means mounted on each said plate for rotatably supporting said monostage rotor between said plates; a stator including a plurality of geometrically and electrically paired U-shaped stator elements mounted stationary in said side plate means while maintaining predetermined spaces between different paired stator elements, said paired U-shaped stator elements consisting of a pair of U-shaped stator cores, each made of U-shaped magnetic material laminations, said paired U-shaped stator cores having stator teeth formed on at least a pair of mutually opposing end surfaces thereof to axially face said rotor teeth, and; excitation winding means wound on each said stator core.

US 2009/127410 A1 discloses a linear electric motor with a movable element comprising guided parts guided by a guide rail.

WO 95/12914 A1 discloses a linear electric motor where a holder holding laminated teeth is interposed in the thickness direction between two non-magnetic plate-like members.

### SUMMARY OF THE INVENTION

### TECHNICAL PROBLEMS

In recent years, the demand for conveying, for example, lightweight items at further higher speeds and increased acceleration using a linear motor is growing. Further, it is expected that there may be cases where the above-described linear motors cannot fully meet such a demand.

Accordingly, the inventor of the present invention has conducted thorough study and as a result has made an invention of a linear motor in which a further weight reduction of a movable element is realized, and which still avoids a problem that the intended function of a movable element as a secondary side member capable of moving in a linear direction relative to a stator is impaired by displacement of a magnetic pole tooth in the movable element, the displacement being caused by the movement of the movable element itself at high speeds and great acceleration.

Further, in the case where a further weight reduction of a movable element is realized in order to meet the demand described above, if the weight reduction invites a reduction in rigidity of the movable element and deflection deformation of the movable element, a gap of a uniform prescribed dimension cannot be secured between the movable element and a stator. Under such circumstances, movement of the movable element at high speeds and great acceleration cannot be realized. Further, with a linear motor including a movable element and a stator opposed to each other via a gap, the magnetic force acting on the movable element by the stator is designed to be balanced in the height direction being the opposing direction of the movable element and the stator. Thus, it is structured such that any force other than those in the movement direction does not substantially act on the movable element. However, actually, by the tolerances during assembly or manufacture of the linear motor, suction acts on, in the stator, a portion relatively nearer to the movable element. Then, it is expected that, with a movable element whose weight has been reduced, the degree of deflection deformation becomes disadvantageously great due to such unbalanced suction. Further, in the case where a structure in which the movable element is linearly moved while a guided part attached to the movable element is guided by a guide rail is employed, it is also expected that a biased load acts on the guided part and the guide rail due to unbalanced magnetic suction. This may inhibit an increase in the life of the guided part and the guide rail. Here, when the guided part and the guide rail are increased in size so as to be capable of withstanding such a biased load, it cannot be regarded as a perfect structure, because a reduction in size cannot be realized.

Accordingly, the inventor of the present invention has conducted thorough study and as a result has made an invention of a linear motor as defined in claim 1 having the following characteristics. The deflection of a movable element itself associated with a further weight reduction of the movable element, and deformation of the movable element due to unbalanced suction are prevented or suppressed. A gap of a prescribed dimension is secured between a stator and the movable element.
Thus, the movable element can be moved at high speeds and great acceleration. The movable element is linearly moved while a guided part attached to the movable element is guided by a guide rail. Here, an increase in the life and a reduction in size of the guided part and the guide rail are achieved. The guided part can properly be attached to a member that contributes to an improvement in rigidity of the movable element.

### SOLUTION TO PROBLEMS

The invention is defined by independent claim 1. Advantageous embodiments are defined in the dependent claims. A first aspect of the present invention relates to a linear motor including: a stator as a primary side magnetic field generating member having a coil; and a movable element as a secondary side member disposed at a position opposing to the stator via a prescribed gap in a thickness direction and capable of moving in a linear direction relative to the stator.

In the linear motor according to the present invention the stator includes a plurality of first magnetic pole teeth capable of forming a magnetic field and disposed at a prescribed pitch along a movement direction of the movable element (hereinafter simply referred to as the "movement direction"). The movable element includes a second magnetic pole tooth capable of forming a magnetic field, and a nonmagnetic holder holding the second magnetic pole tooth. A surface of the movable element opposing to the stator is smoothly formed. Further, in the holder, a holding hole holding the second magnetic pole tooth without any clearance and penetrating in a thickness direction and a hollow thinning hole are disposed along the movement direction. In the holder, a boundary portion between the holding hole and the thinning hole or another holding hole adjacent to the holding hole in the movement direction is allowed to function as a positioning part in the movement direction of the second magnetic pole tooth held by the holding hole.

In the present invention, "to dispose the holding hole and the thinning hole along the movement direction" means formation of any of patterns including a pattern in which one holding hole and one thinning hole are alternately formed along the movement direction, a pattern in which a plurality of successive holding holes and a plurality of successive thinning holes (for example, two pieces each) are alternately formed along the movement direction, and a pattern in which the holding hole and the thinning hole are arranged at random along the movement direction. Further, the movable element of the linear motor of the present invention does include a plurality of second magnetic pole teeth. Then, the number of holding holes formed at the holder is just required to be identical to or greater than the number of the second magnetic pole teeth. In the linear motor of the present invention, the boundary portion between the holding hole holding the second magnetic pole tooth and the thinning hole or another holding hole adjacent to the holding hole in the movement direction (whether the holding hole and the thinning hole are adjacent to each other in the movement direction, or whether the holding holes are adjacent to each other in the movement direction depends on the arrangement relationship between the holding hole and the thinning hole in the holder) is allowed to function as the positioning part in the movement direction of the second magnetic pole tooth held by the holding hole.

With such a linear motor, by forming a hollow thinning part in addition to the holding hole holding the second magnetic pole tooth at the holder structuring the movable element as the secondary side member, a weight reduction of the holder, and ultimately a weight reduction of the whole movable element can be realized. Thus, it becomes possible to allow the movable element to move at further higher speeds and greater acceleration. Further, since the surface of the movable element opposing to the stator is smoothly formed, a gap of a uniform prescribed dimension can be secured between the stator and the movable element. Thus, a normal operation of causing the movable element to move in the linear direction relative to the stator can be secured.

Additionally, with the linear motor of the present invention, the position of the second magnetic pole tooth held by the holding hole in the movement direction can be maintained by the boundary portion between the holding hole and the thinning hole adjacent to each other along the movement direction, or by the boundary portion between the holding holes adjacent to each other in the movement direction. Accordingly, even when the movable element itself moves at high speeds and great acceleration, it becomes possible to avoid the problem that the intended function of the movable element as the secondary side member is impaired because of loss of proper relative positional relationship between the second magnetic pole tooth and the first magnetic pole tooth of the stator, which would otherwise be caused by the second magnetic pole tooth in the movable element displacing in the movement direction of the movable element attributed to the movement of the movable element.

Then, with the linear motor of the present invention, the positioning part in the movement direction of the second magnetic pole tooth held by the holding hole is implemented by the boundary portion between the holding hole and the thinning hole adjacent to each other in the movement direction in the holder, or by the boundary portion between the holding holes adjacent to each other in the movement direction in the holder. Accordingly, as compared to the mode in which the positioning part is implemented by a dedicated member separately provided at the holder or by a special-shaped portion formed at a specific site of the holder, a reduction in the number of components and simplification of the shape of the holder itself can be attained and hence the positioning part of the present invention is suitable. Here, with the holder in which a plurality of holding holes and a plurality of thinning holes are alternately disposed one-by-one along the movement direction, all the holding holes are adjacent to the thinning holes in the movement direction, and the boundary portions between the holding holes and the thinning holes adjacent to each other along the movement direction function as the positioning part in the movement direction of the second magnetic pole tooth held by the holding holes.

Further, with the holder in which the successive holding holes and the successive thinning holes are alternately disposed along the movement direction, there exist a holding hole adjacent to a thinning hole in the movement direction, and a holding hole adjacent to another holding hole in the movement direction. In this case, both the boundary portion between the holding hole and the thinning hole adjacent to each other along the movement direction, and the boundary portion between the holding holes adjacent to each other along the movement direction function as the positioning part in the movement direction of the second magnetic pole tooth held by the holding holes.

Further, with the holder in which the holding holes and the thinning holes are formed at random along the movement direction, the part functioning as the positioning part in the movement direction of the second magnetic pole tooth held by the holding holes is the boundary portion between a holding hole and a thinning hole adjacent to each other along the movement direction. When there exists a boundary portion between holding holes adjacent to each other along the movement direction, the boundary portion (the boundary portion between the holding holes) also functions as the positioning part of the second magnetic pole tooth.

Still further, in the linear motor of the present invention, in order to prevent or suppress any possible deflection of the movable element caused by a reduction in strength of the movable element attributed to a weight reduction of the holder, the movable element including a nonmagnetic reinforcing part enhancing rigidity of the holder can be employed.

One suitable non-inventive example of the reinforcing part is a component having a smooth plate-like site covering at least, in the holder, a surface that opposes to the stator. Such a reinforcing part can improve rigidity of the holder. Further, it becomes possible to eliminate unevenness between the movable element and the stator, thereby securing a uniform gap. This contributes to improving torque.

Further, a second aspect of the present invention relates to a linear motor including: a stator as a primary side magnetic field generating member having a coil; a movable element as a secondary side member disposed at a position opposing to the stator via a prescribed gap in a thickness direction and capable of moving in a linear direction relative to the stator; and a guide rail provided near the stator and capable of guiding the movable element in a movement direction.

The stator of the linear motor of the present invention includes a first magnetic pole tooth capable of forming a magnetic field and disposed at a prescribed pitch along the movement direction of the movable element (hereinafter simply referred to as the "movement direction"). The movable element includes a second magnetic pole tooth capable of forming a magnetic field and a nonmagnetic reinforcing part that enhances rigidity of a nonmagnetic holding member holding the second magnetic pole tooth. The reinforcing part includes a stator opposing surface disposed at a position nearer to the stator in the thickness direction than at least a surface of the second magnetic pole tooth, the surface of the second magnetic pole tooth opposing to the stator. The reinforcing part further includes a guided part attaching surface to which a guided part guided by the guide rail is attached. At least the stator opposing surface is smoothly formed and the stator opposing surface is in parallel to a surface of the first magnetic pole tooth, the surface of the first magnetic pole tooth opposing to the movable element.

With such a linear motor, since the movable element is structured using the second magnetic pole tooth and the nonmagnetic reinforcing part, a reduction in the number of constituent elements of the movable element can be achieved. Accordingly, a weight reduction of the whole movable element can be realized. Deflection of the nonmagnetic holding member holding the second magnetic pole tooth is prevented by the reinforcing part. In the reinforcing part, the stator opposing surface disposed at the position nearer to the stator in the thickness direction than the second magnetic pole tooth is smoothly formed. The stator opposing surface is disposed in parallel to, in the first magnetic pole tooth of the stator, a surface opposing to the movable element. Therefore, a uniform gap of a prescribed dimension can be secured between the stator and the movable element, torque is improved, and a normal operation of allowing the movable element to linearly move can be secured. Further, due to tolerance during assembly or manufacture of the linear motor, suction acts on, in the stator, a portion relatively nearer to the movable element. With the movable element having its weight reduced, the degree of deflection deformation is expected to become great due to such unbalanced suction. However, since the linear motor of the present invention employs the structure in which the reinforcing part prevents deflection of the nonmagnetic holding member holding the second magnetic pole tooth, deformation of the movable element due to unbalanced suction can also be prevented or suppressed.

Furthermore, with the linear motor of the present invention, by employing the structure in which the linear movement of the movable element is guided by the guide rail, the stable operation of the movable element is maintained. Further, it becomes possible to prevent or suppress a biased load acting on the guided part and the guide rail due to unbalanced magnetic suction, and hence an increase in life of the guided part and the guide rail can be achieved. Further, with the linear motor of the present invention, it is not necessary to increase the size of the guide rail and the guided part so as to be capable of withstanding a biased load. Accordingly, a reduction in size of the guide rail and the guided part can also be realized. Further, the linear motor of the present invention can solve unbalanced magnetic suction. As compared to the structure in which unbalanced magnetic suction occurs, the rated load can be reduced by a reduction in the load acting on the guided part and the guide rail. Thus, it becomes possible to select a lightweight and small guided part. As a result, by attaching the small and lightweight guided part to the movable element, the movable element can achieve further greater acceleration.

Additionally, with the linear motor of the present invention, the guided part attaching surface to which the guided part is attached is secured at the reinforcing part that contributes to enhancing rigidity of the movable element. Thus, it is not necessary to provide the movable element with a dedicated member for attaching the guided part to the movable element, and a reduction in the number of components can be achieved.

In this manner, with the linear motor of the present invention, both a weight reduction and an improvement of rigidity of the whole movable element can be achieved. Further, a uniform gap can be secured between the movable element and the stator, and the whole movable element can be moved at further higher speeds and greater acceleration while allowing the guided part to be guided by the guide rail.

Further, with the linear motor of the present invention, it is possible to set the stator opposing surface of the reinforcing part and the guided part attaching surface at different levels. However, in order to secure workability and high dimension accuracy, it is desirable that the stator opposing surface and the guided part attaching surface are formed on an identical plane.

Further, in the linear motor of the present invention, by forming a surface of the guided part being in contact with the guided part attaching surface and the guided part attaching surface to be smooth, an excellent attachment state of the guided part to the guided part attaching surface of the reinforcing part and stable linear movement of the movable element via the guided part can be maintained.

In the present invention, the reinforcing part is implemented by a nonmagnetic case capable of storing the holding member.

Further, in the linear motor of the present invention, the thinning part can be formed at a site in the case not contributing to storage of the holding member and not contributing to attachment of the guided part, in order to achieve a weight reduction of the movable element while securing an excellent storage state of the holding member by the case and an excellent attachment state of the guided part to the case.

Still further, though the first and second aspects of the present invention include a linear motor in which a yoke is provided (formed) at the movable element, from the viewpoint of a weight reduction of the movable element, the movable element not provided with a yoke (not having a portion functioning as a yoke) is advantageous. Accordingly, with the linear motor of the present invention, the structure in which the movable element is disposed at a position being interposed between two stators via prescribed gaps in a thickness direction can be employed. With such a structure, a weight reduction of the movable element by dispensing with a yoke can be achieved. In the case where a magnetic circuit is formed between the movable element and the two stators between which the movable element is interposed in order to provide thrust to the movable element, since the second magnetic pole tooth of the movable element is independently structured without being continuous to any yoke, as compared to the structure in which the second magnetic pole tooth of the movable element is continuous to a yoke, a relative reduction of leakage fluxes can also be achieved. The magnetic flux density between the first magnetic pole tooth of each of the stators and the second magnetic pole tooth of the movable element can be further increased, thereby increasing thrust provided to the movable element. Thus, even with power of an identical amount, it becomes possible to further increase acceleration of the movable element and to accelerate reaction.

Further, in the first aspect of the present invention, the hollow thinning hole formed at the holder may be formed by a recess not penetrating in the thickness direction of the holder. However, from the viewpoint of a weight reduction and workability, it is preferable to employ the thinning hole penetrating in the thickness direction of the holder.

### ADVANTAGEOUS EFFECTS OF INVENTION

According to the first aspect of the present invention, the movable element as the secondary side member driven by the stator so as to be movable in the linear direction is structured to allow the second magnetic pole tooth disposed along the movement direction to be held by the nonmagnetic holder. In the holder, a holding hole penetrating in the thickness direction and holding the second magnetic pole tooth without any clearance and a hollow thinning hole are formed along the movement direction. In the holder, the boundary portion between the holding hole and the thinning hole adjacent to each other in the movement direction or the boundary portion between the holding holes adjacent to each other in the movement direction in the holder is allowed to function as the positioning part in the movement direction of the second magnetic pole tooth held by the holding hole. Accordingly, a weight reduction of the movable element can be realized. Further, it becomes possible to provide a linear motor that can avoid the problem that the intended function of the movable element as the secondary side member that can move in the linear direction relative to the stator is impaired due to displacement of the magnetic pole tooth in the movable element, which would otherwise be caused by movement of the movable element itself at high speeds and great acceleration.

According to the second aspect of the present invention, the movable element as the secondary side member driven by the stator so as to be movable in the linear direction includes: the second magnetic pole tooth capable of forming a magnetic field and disposed at a prescribed pitch along the movement direction; and the nonmagnetic reinforcing part enhancing rigidity of the nonmagnetic holding member holding the second magnetic pole tooth. The stator opposing surface of the reinforcing part is smoothly formed. Accordingly, a weight reduction and an improvement in rigidity of the movable element can be realized. Further, the structure in which the linear movement of the movable element is guided by the guide rail is employed, thereby maintaining the stable operation of the movable element. The guided part guided by the guide rail is structured so as to be capable of being attached to the guided part attaching surface formed at the reinforcing part contributing to an improvement in rigidity of the movable element. Thus, it becomes possible to provide a linear motor in which the attachment process of the guided part to a prescribed location (the guided part attaching surface) in the movable element can be simplified and in which an excellent attachment state of the guided part to the reinforcing part can be maintained. Further, by employing the structure described above, while a weight reduction of the movable element is achieved, deformation of the movable element due to unbalanced suction can also be prevented or suppressed.

### BRIEF DESCRIPTION OF THE DRAWINGS

Fig. 1 is an exploded perspective view of a linear motor common to first and second embodiments of the present invention.
Fig. 2 is an overall perspective view of the linear motor according to the first and second embodiments from which a housing is omitted.
Fig. 3 shows the linear motor according to the first and second embodiments as seen from the movement direction of a movable element.
Fig. 4 is a view on arrow a in Fig. 3.
Fig. 5 is a cross-sectional view taken along line b-b in Fig. 3.
Fig. 6 is a substantial part enlarged view of Fig. 5.
Fig. 7 is a cross-sectional view taken along line d-d in Fig. 4.
Fig. 8 shows the movable element according to the embodiments as seen from the movement direction.
Fig. 9 is a view on arrow e in Fig. 8.
Fig. 10 is a cross-sectional view taken along line f-f in Fig. 9.
Fig. 11 is an overall perspective view of a movable element according to a non-inventive variation of the first embodiment.
Fig. 12 shows the movable element shown in Fig. 11 as seen from the movement direction.
Fig. 13 shows a movable element according to another non-inventive variation of the first embodiment as seen from the movement direction.
Fig. 14 is an exploded perspective view of a movable element according to the second embodiment.
Fig. 15 shows the movable element according to the second embodiment as seen from the movement direction.
Fig. 16 is a view on arrow g in Fig. 15.
Fig. 17 is a cross-sectional view taken along line h-h in Fig. 16.
Fig. 18 is an overall perspective view of a movable element according to a non-inventive variation of the second embodiment.
Fig. 19 shows the movable element shown in Fig. 18 as seen from the movement direction.
Fig. 20 shows a movable element according to another non-inventive variation of the second embodiment as seen from the movement direction.

### DESCRIPTION OF EMBODIMENTS

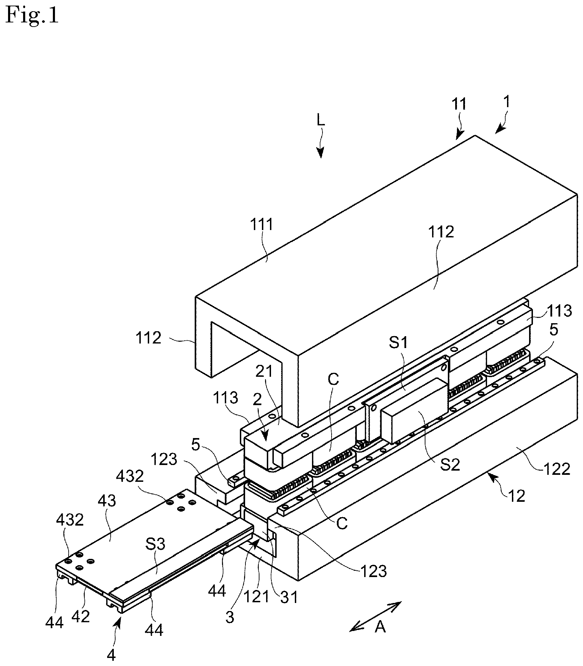

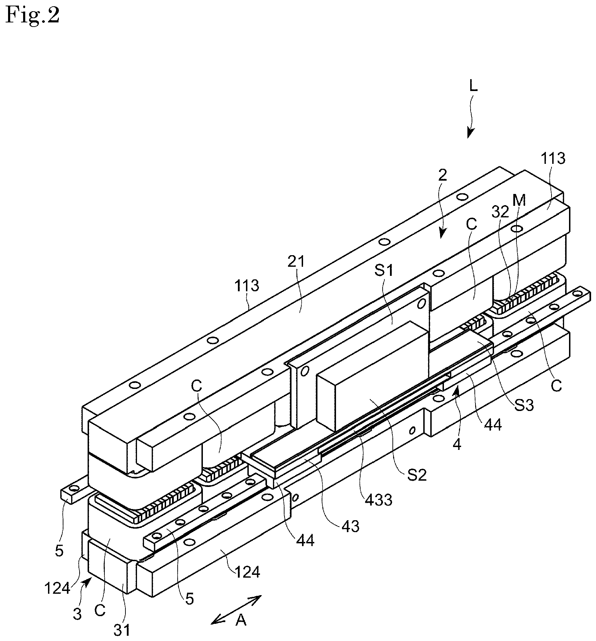

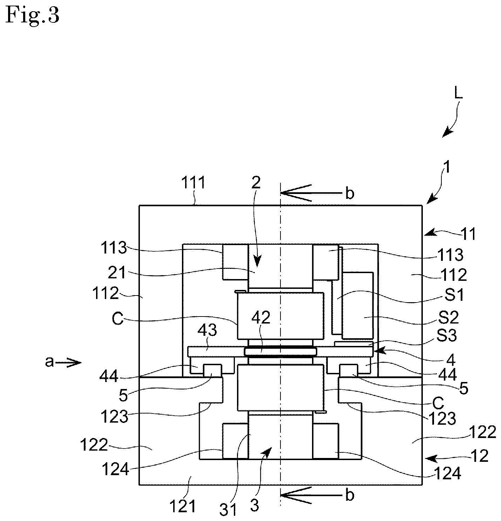

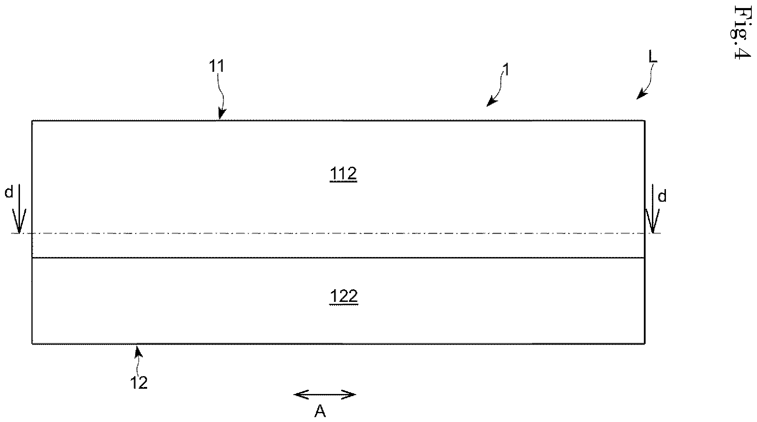

A linear motor L according to the first embodiment of the present invention and a linear motor L according to the second embodiment include structures mostly common to them. Firstly, a description will be given of the structures common to them. In the drawings, the constituent elements being common to the first and second embodiments are denoted by identical reference signs. As shown in Figs. 1 to 4 (Fig. 1 is an exploded perspective view of the whole linear motor L; Fig. 2 is a perspective view of the linear motor L without a housing 1; Fig. 3 shows the whole linear motor L as seen from movement direction A of a movable element 4; Fig. 4 is a view on arrow a in Fig. 3), the linear motor L chiefly includes stators 2 and 3 as an opposed pair of primary side magnetic field generating members, a movable element 4 as a secondary side member disposed between the pair of stators 2 and 3. The pair of stators 2 and 3 allows the movable element 4 to move in the linear direction (the direction indicated by arrow A in Figs. 1 and 2).

In the linear motor L according to the present embodiments, in the height direction being the opposed direction of the pair of stators 2 and 3, near the relatively lower side stator 3 (hereinafter such relatively lower side stator 3 will be referred to as the "lower stator 3", and the other stator is referred to as the "upper stator 2"), guide rails 5 capable of guiding the movable element 4 in a prescribed movement direction A are provided. As described above, the movement direction A of the movable element 4 is the direction indicated by arrow A in Fig. 1. The "movement direction A" in the following description refers to the movement direction A of the movable element 4. Further, the "width direction" in the following description refers to the direction perpendicular to the movement direction A of the movable element 4, and also perpendicular to the opposing direction of the pair of stators 2 and 3 (the height direction).

In the present embodiments, the upper stator 2, the lower stator 3, the movable element 4, and the guide rails 5 are structured to be capable of being stored in the common housing 1. The housing 1 includes an upper housing 11 and a lower housing 12.

As shown in Figs. 1, 3 and 4, the upper housing 11 is inverted U-shaped opened in the movement direction A and the downward direction. The upper housing 11 is made up of a ceiling wall 111, and a pair of suspending walls 112 suspended downward from both sides of the ceiling wall 111. In the present embodiments, at the face-down surface of the ceiling wall 111, a pair of upper holding plates 113 being capable of holding the upper stator 2 clamped in the width direction is provided. A sensor bracket S1 is attached to one holding plate 113 out of the pair of holding plates 113, and a sensor head S2 is fixed to the sensor bracket S1.

As shown in Figs. 1, 3 and 4, the lower housing 12 is U-shaped opened in the movement direction A and the upward direction. The lower housing 12 is made up of a bottom wall 121, a pair of upright walls 122 standing upward from the both sides of the bottom wall 121, and projecting walls 123 respectively projecting from the top end of the upright walls 122 toward the other opposing upright walls 122. In the present embodiments, at the face-up surface of the bottom wall 121, a pair of lower holding plates 124 being capable of holding the lower stator 3 clamped in the width direction is provided. The distance between the projecting ends of the paired upright walls 122 is set to be greater than the width dimension of the lower stator 3. To each of the face-up surfaces of the upright walls 122, the guide rail 5 extending along the movement direction A is fixed.

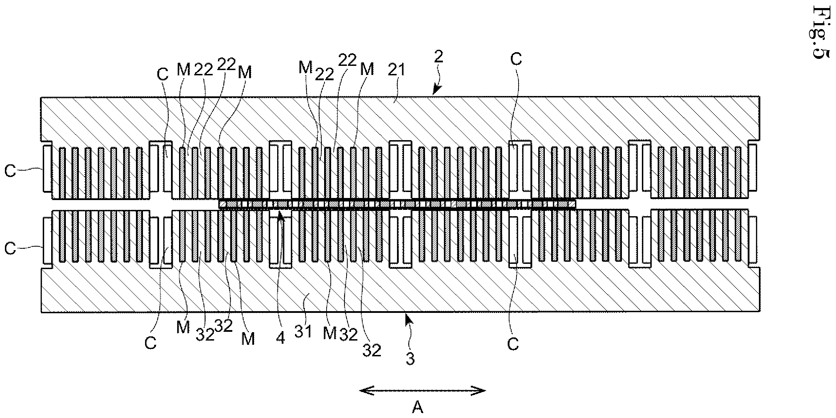

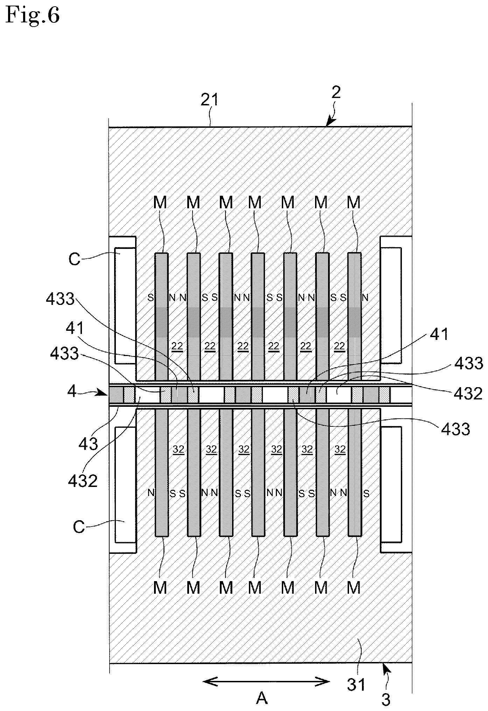

As shown in Figs. 2, 3 and 5 (Fig. 5 is a cross-sectional view taken along line b-b in Fig. 3), the upper stator 2 includes an upper stator core part 21, and coils C provided at the upper stator core part 21. The upper stator core part 21 is, for example, formed of soft magnetic laminated steel plates (steel plates laminated in the width direction). At the end which is relatively near to the movable element 4 in the height direction (the bottom end), upper teeth 22 (pole teeth) are formed at a certain interval along the movement direction A. Permanent magnets M are each inserted and fixed between the upper teeth 22 adjacent to each other in the movement direction A. In the present embodiments, as shown in Fig. 6 (Fig. 6 is a substantial part enlarged view of Fig. 5), the permanent magnets M are disposed such that the south pole or the north pole is oriented toward the movement direction A of the movable element 4. The permanent magnets M adjacent to each other along the movement direction A are opposite to each other in the direction of magnetization. Accordingly, in a plurality of upper teeth 22 each being interposed between the permanent magnets M adjacent to each other in the movement direction A, the upper teeth 22 functioning as magnetic pole teeth (the "first magnetic pole teeth" of the present invention), the south pole upper teeth 22 and north pole upper teeth 22 are alternately disposed in the movement direction A. Note that, the pitch of the permanent magnets M is preferably about half the pitch of second magnetic pole teeth 41, which will be described later. However, the pitch of the permanent magnets M is not limited to half the pitch of the second magnetic pole teeth 41 which will be described later, and may be set to any appropriate pitch.

The coils C are each wound in slots provided for every prescribed number of upper teeth 22 in the upper stator core part 21. In the present embodiments, current of U-phase, V-phase, and W-phase is passed by a not-shown three-phase AC power supply. Then, regarding that a region in the upper stator 2 provided with the coils C by the number capable of passing current of three phases (that is, three coils C) is one set, the upper stator 2 of the present embodiments is provided with a plurality of sets in the movement direction A (two sets in the example shown in the drawings).

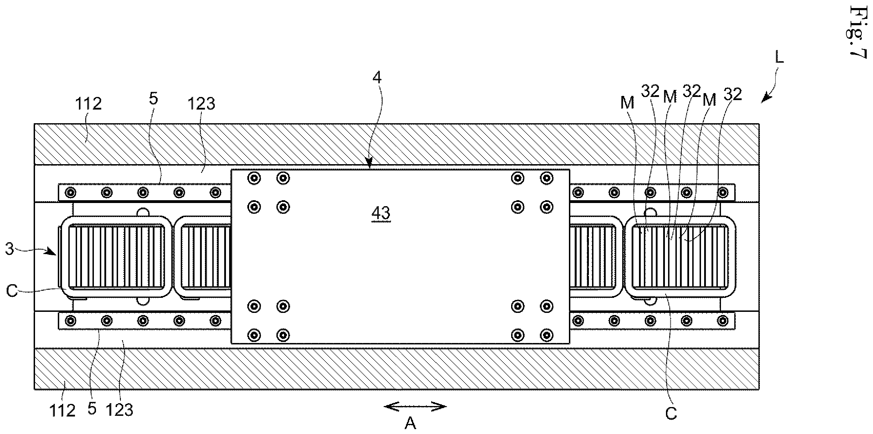

As shown in Figs. 2, 3, 5 to 7 (Fig. 7 is a cross-sectional view taken along line d-d in Fig. 4), the lower stator 3 has a shape identical to the upper stator 2, and is different from the upper stator 2 in that the lower teeth 32 functioning as the first magnetic pole teeth of the present invention is set to the magnetic pole being opposite to that of the upper teeth 22 of the upper stator 2 opposing in the height direction. That is, the lower stator 3 includes a lower stator core part 31, and coils C provided at the lower stator core part 31. The lower stator core part 31 is, for example, formed by soft magnetic laminated steel plates (steel plates laminated in the width direction being perpendicular to the movement direction A). At the end of the lower stator core part 31 which is relatively near to the movable element 4 in the height direction (the top end), a plurality of lower teeth 32 are provided at a prescribed pitch along the movement direction A, and lower slots in which the coils C are wound are formed. Further, as shown in Fig. 6, permanent magnets M are each inserted between the lower teeth 32 adjacent to each other in the movement direction A. The polarity of the permanent magnets M adjacent to each other in the movement direction A is set to be opposite from each other's. Thus, in a plurality of lower teeth 32 each being interposed between the permanent magnets M adjacent to each other in the movement direction A, the lower teeth 32 functioning as magnetic pole teeth (the "first magnetic pole teeth" of the present invention), the south pole lower teeth 32 and the north pole lower teeth 32 are alternately disposed along the movement direction A.

Such upper stator 2 and lower stator 3 are respectively held by the upper holding plates 113 and the lower holding plates 124 in the housing 1. In this held state, the upper stator 2 and lower stator 3 are maintained to be parallel to each other while having the movable element 4 interposed between them. Then, as described above, in the linear motor L according to the present embodiments, in the upper stator 2 and the lower stator 3, the upper first magnetic pole teeth 22 (the upper teeth 22) and the lower first magnetic pole teeth 32 (the lower teeth 32) opposed to each other in the height direction are set to be different from each other in the magnetic pole.

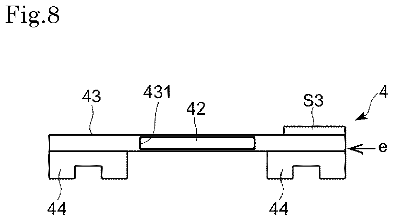

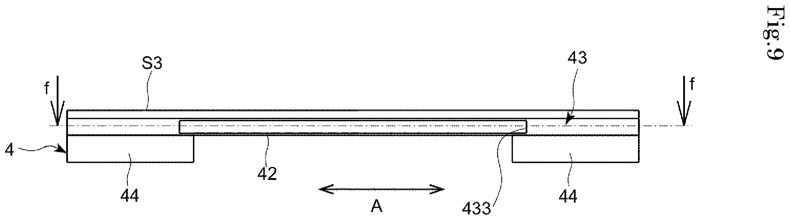

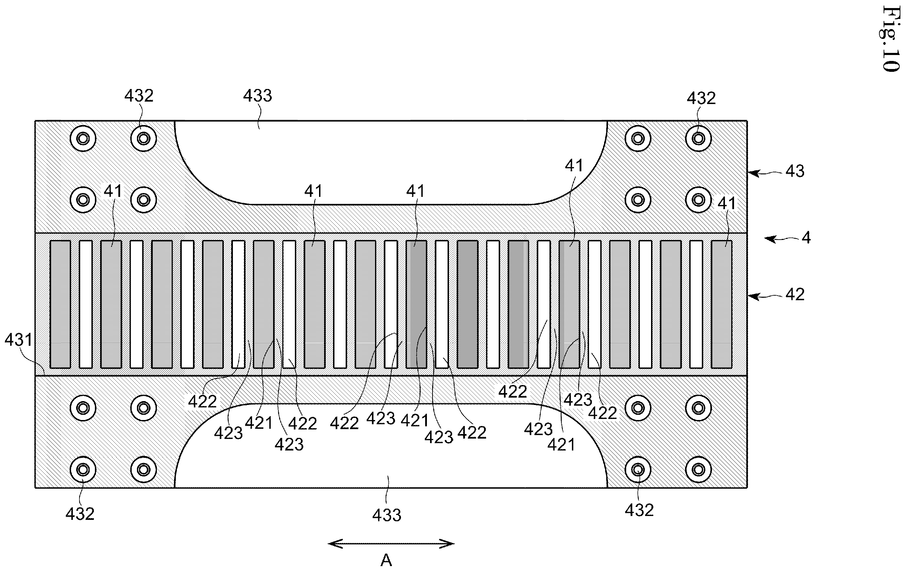

Hereinafter, a description will be given of the first embodiment. In connection with the linear motor according to the first embodiment, as shown in Figs. 1 to 3 and Figs. 7 to 10 (Fig. 8 is an overall view of the movable element 4 as seen from the movement direction A, Fig. 9 is a side view of the movable element 4 (a view on arrow e in Fig. 8), and Fig. 10 is a cross-sectional view taken along line f-f in Fig. 9), the movable element 4 includes a plurality of second magnetic pole teeth 41 disposed at a prescribed pitch along the movement direction A and capable of forming a magnetic field, a nonmagnetic holder 42 holding the plurality of second magnetic pole teeth 41, a case 43 capable of storing the holder 42 holding the second magnetic pole teeth 41, and guided parts 44 provided at the case 43 and guided by the guide rails 5. The surfaces opposing to the upper stator 2 and the lower stator 3 are smoothly formed. In the present embodiment, the dimension of the movable element 4 in the movement direction A is set to a length corresponding to one set of the upper stator 2 and the lower stator 3 described above.

The holder 42 is an integrally molded product made of, for example, resin, in which holding holes 421 holding the second magnetic pole teeth 41 without any clearance, and hollow thinning holes 422 are alternately formed along the movement direction A. In the present embodiment, holes penetrating in the thickness direction are employed as the holding holes 421 and the thinning holes 422. Both the holding holes 421 and the thinning holes 422 are elongated in the width direction of the holder 42 and substantially quadrangular in a cross section taken in parallel to the thickness direction. With the movable element 4 of the present embodiment, the opening dimension of the holding hole 421 in the movement direction A is set to be greater than the opening dimension of the thinning hole 422 in the movement direction A. Note that the opening dimension of the thinning hole 422 in the movement direction A may be set to be greater than the opening dimension of the holding hole 421 in the movement direction A.

Then, in a state where the second magnetic pole teeth 41 are held by the holding holes 421 without any clearance, in the holder 42, boundary portions 423 between the holding holes 421 and the thinning holes 422 adjacent to each other in the movement direction A function as the positioning part of the second magnetic pole teeth 41 in the movement direction A.

The second magnetic pole teeth 41 are formed by steel plates as so-called electromagnetic steel plates, which are ferromagnetic plate members, being laminated in the width direction. Note that, the second magnetic pole teeth 41 obtained by lamination of steel plates as electromagnetic steel plates in the movement direction A may be used. Then, the upper portion of the second magnetic pole teeth 41 held by the holding holes 421 of the holder 42 opposes to the upper first magnetic pole teeth 22, and the lower portion opposes to the lower first magnetic pole teeth 32. Further, each of the second magnetic pole teeth 41 is independent in the movement direction A by the boundary portion 423 between each holding hole 421 and each thinning hole 422 in the holder 42. With the linear motor L including the movable element 4 provided with the second magnetic pole teeth 41 structured and disposed as described above, an eddy current occurring in the movable element 4 is restrained by the magnetic field generated by each of the stators (the upper stator 2 and the lower stator 3). Thus, a reduction in magnetic efficiency can be prevented.

The case 43 is nonmagnetic and includes a holder storing part 431 that can store the holder 42 inside, and the entire surfaces opposing to the upper stator 2 and the lower stator 3 are smoothly formed. The case 43 is required to be, in addition to nonmagnetic, insulating, small in specific gravity, and high in rigidity. In the present embodiment, as a material that satisfies all the requirements, CFRP (carbon fiber reinforced plastics) is employed. That is, the linear motor L according to the present embodiment employs the movable element 4 including the case 43 being an integrally molded product made of CFRP.

The holder storing part 431 in the case 43 is opened to the outside in the movement direction A. In a state where the holder 42 is stored in the holder storing part 431, the end of the case 43 and the end of the holder 42 in the movement direction A are aligned with each other. Further, the width dimension of the case 43 is greater than the width dimension of the holder 42. At the corner portions of the case 43 that do not contribute to storage of the holder 42 (that is, where the holder storing part 431 is not formed), the guided parts 44 can be attached. In the present embodiment, the guided parts 44 are fixed to the case 43 using screw insert holes 432 formed at the four corners of the case 43.

In connection with each of the guided parts 44, the surface to be in contact with the face-down surface of the case 43 is set to be a smooth surface. Each guided part 44 is provided with a guide engaging part capable of engaging with the guide rail 5 while clamping the guide rail 5 in the width direction. In connection with the linear motor L according to the present embodiment, by one guide rail 5, two guided parts 44 disposed to be away from each other by a prescribed dimension along the movement direction A are guided.

Further, at the face-up surface of the case 43, a sensor scale S3 extending in the movement direction A is fixed by any appropriate scheme. The sensor scale S3 is disposed in a region in the face-up surface of the case 43 so as not to overlap the holder storing part 431 in a plan view. By the sensor scale S3 being read by the sensor head S2 provided at the housing 1, the position of the movable element 4 can be grasped.

In connection with the linear motor L according to the present embodiment, at the case 43, thinning parts 433 are formed at sites not contributing to storage of the holder 42 and not contributing to attachment of the guided parts 44. Specifically, as shown in Fig. 10, at the case 43, the thinning parts 433 respectively opened only at the sides of the case 43 are formed at the portions between which the holder storing part 431 can be interposed in the width direction.

In the case 43 structured in this manner, as shown in Fig. 6, a region in the face-up surface overlapping the holder storing part 431 in a plan view opposes to the upper stator 2, and a region in the face-down surface overlapping the holder storing part 431 in a plan view opposes to the lower stator 3. Further, as to the case 43 itself, the entire face-up surface and the entire face-down surface are smooth, and the case 43 is formed to be plate-like as a whole. Such a case 43 functions as a reinforcing part that enhances rigidity of the holder 42.

Then, in connection with the linear motor L according to the present embodiment, as shown in Fig. 6, between a surface, in the movable element 4, that opposes to the upper stator 2 (specifically, in the face-up surface of the case 43, the surface that overlaps the holder storing part 431 in a plan view) and the upper stator 2, and between a surface opposing to the lower movable element 3 (specifically, in the face-down surface of the case 43, the surface that overlaps the holder storing part 431 in a plan view) and the lower stator 3, gaps (magnetic gaps) of a prescribed identical dimension are respectively formed.

In the linear motor L according to the present embodiment including the movable element 4, the upper stator 2, and the lower stator 3 set to such relative positional relationship, the magnetic forces acting on the movable element 4 by the upper stator 2 and the lower stator 3 are balanced in the height direction, and any force other than in the movement direction A substantially does not act on the movable element 4.

In the linear motor L structured in this manner, the upper first magnetic pole teeth 22 and the lower first magnetic pole teeth 32 opposing to each other in the height direction are different in polarity. A not-shown control unit allows three-phase alternating current to pass through the coils C in a prescribed pattern. Thus, a magnetic circuit of various patterns including the stators (the upper stator 2 and the lower stator 3) and the movable element 4 is formed; in each of the gaps between the movable element 4 and the stators (the upper stator 2 and the lower stator 3), an alternating magnetic flux passes among the upper first magnetic pole teeth 22, the second magnetic pole teeth 41, and the lower first magnetic pole teeth 32; and suction is generated between the upper first magnetic pole teeth 22 and the second magnetic pole teeth 41, and between the second magnetic pole teeth 41 and the lower first magnetic pole teeth 32. Thus, thrust can be generated at the movable element 4.

In this manner, in the linear motor L according to the present embodiment, the stators (the upper stator 2 and the lower stator 3) having the coils C and functioning as the primary side magnetic field generating members are provided with the first magnetic pole teeth (the upper first magnetic pole teeth 22 and the lower first magnetic pole teeth 32) capable of forming a magnetic field along the movement direction A of the movable element 4 (hereinafter simply referred to as the "movement direction A") at a prescribed pitch. The movable element 4 functioning as the secondary side member includes the second magnetic pole teeth 41 disposed at a prescribed pitch along the movement direction A and capable of forming a magnetic field, and the nonmagnetic holder 42 holding the plurality of second magnetic pole teeth 41. The surfaces of the movable element 4 opposing to the stators (the upper stator 2 and the lower stator 3) are smoothly formed. Accordingly, it is not necessary to provide the movable element 4 with the coils C. In this point, as compared to the structure in which the movable element is caused to function as a primary magnetic field generating member, a reduction in size and weight of the movable element 4 can be realized. Further, in the linear motor L according to the present embodiment, since the holder 42, in which the holding holes 421 penetrating through the thickness direction and holding the second magnetic pole teeth 41 without any clearance and the hollow thinning holes 422 are alternately formed along the movement direction A, is employed, a further weight reduction of the movable element 4 can be achieved. Thus, the movable element 4 can be moved at further higher speeds and greater acceleration. Since the boundary portions 423 in the holder 42 between the holding holes 421 and the thinning holes 422 adjacent to each other in the movement direction A are caused to function as the positioning part in the movement direction A of the second magnetic pole teeth 41 held by the holding hole 421, even when the movable element 4 itself moves at high speeds and great acceleration, it becomes possible to avoid the problem that the intended function of the movable element 4 as a secondary side member is impaired because of loss of proper relative positional relationship between the second magnetic pole teeth 41 and the first magnetic pole teeth (the upper first magnetic pole teeth 22 and the lower first magnetic pole teeth 32) of the stators (the upper stator 2 and the lower stator 3), which would otherwise be caused by the second magnetic pole teeth 41 in the movable element 4 displacing in the movement direction A of the movable element 4 attributed to the high speeds and acceleration movement of the movable element 4. Further, in the movable element 4, since the surfaces opposing to the stators (the upper stator 2 and the lower stator 3) are smoothly formed, a gap of a uniform prescribed dimension can be secured between each of the stators (the upper stator 2 and the lower stator 3) and the movable element 4. This contributes to an improvement in torque, and a normal operation of allowing the movable element 4 to linearly move relative to the stators 2 and 3 can be secured.

Furthermore, in connection with the linear motor L according to the present embodiment, as compared to the mode in which the positioning part in the movement direction A of the second magnetic pole teeth 41 held by the holding holes 421 is implemented by a dedicated member separately provided at the holder 42 or a special-shaped portion formed at a specific site of the holder 42, a reduction in the number of components and the simplification of the shape of the holder 42 itself can be attained and hence the linear motor L according to the present embodiment is suitable.

In particular, the linear motor L according to the present embodiment includes the movable element 4 including the case 43 that can store the holder 42 in the inner space. This case 43 functions as a reinforcing part that enhances rigidity of the holder 42, and effectively prevents weakening that may be otherwise caused by thinning and weight reduction of the movable element 4.

With the linear motor L according to the present embodiment, the reinforcing part is realized by the case 43 having a smooth plate-like site covering the surfaces, in the holder 42, opposing to the stators (the upper stator 2 and the lower stator 3). Accordingly, while great variations in the density of the magnetic flux passing through the second magnetic pole teeth 41 when the coils C are energized is prevented, rigidity of the movable element 4 can be effectively enhanced.

In particular, with the linear motor L according to the present embodiment, the movable element 4 is disposed at the position being interposed between two stators (the upper stator 2 and the lower stator 3) in the thickness direction (the height direction) via prescribed gaps. Accordingly, the second magnetic pole teeth 41 adjacent to each other in the movement direction A of the movable element 4 can be independently formed from each other, instead of being continuously formed via a yoke. As compared to the structure in which the second magnetic pole teeth 41 adjacent to each other in the movement direction A of the movable element 4 are continuously formed via a yoke, the leakage flux that may occur in the movable element 4 when the coils C are energized can be relatively reduced. The magnetic flux density between the first magnetic pole teeth (the upper first magnetic pole teeth 22 and the lower first magnetic pole teeth 32) in the stators (the upper stator 2 and the lower stator 3) and the second magnetic pole teeth 41 of the movable element 4 can further be increased, thereby increasing the thrust provided to the movable element 4. Thus, even with power of an identical amount, it becomes possible to further increase the acceleration of the movable element 4 and to accelerate reaction.

Further, in the linear motor L according to the present embodiment, holes penetrating in the thickness direction of the holder 42 are employed as the hollow thinning holes 422 formed at the holder 42. Accordingly, while the required working is simple, a reduction in weight of the holder 42 and ultimately a reduction in weight of the entire movable element 4 can be attained.

In particular, with a conventional linear motor, because of tolerances during assembly or manufacture, suction acts on a portion of a stator being relatively near to the movable element. It is expected that the degree of deflection deformation becomes great due to such unbalanced suction, with a movable element having its weight reduced. In contrast, with the linear motor L according to the present embodiment, the deflection of the nonmagnetic holding member 42 holding the second magnetic pole teeth 41 is prevented by the case 43 being the reinforcing part. Therefore, deformation of the movable element 4 attributed to unbalanced suction can also be prevented or suppressed.

Furthermore, the linear motor L according to the present embodiment employs the structure in which the movable element 4 is linearly moved while the guide rails 5 are caused to guide the guided parts 44. Thus, while the stable operation of the movable element 4 is maintained, an occurrence of a biased load acting on the guided parts 44 and the guide rails 5 due to unbalanced magnetic suction is prevented or suppressed. Thus, the life of the guided parts 44 and the guide rails 5 can be increased. Further, with the linear motor L according to the present embodiment, it is not necessary to increase the size of the guided parts 44 and the guide rails 5 so as to be capable of withstanding a biased load. Hence, a reduction in size of the whole linear guide mechanism made up of the guided parts 44 and the guide rails 5 can also be achieved. Further, since the linear motor L according to the present embodiment can solve the unbalanced magnetic suction, as compared to the structure associated with the unbalanced magnetic suction, the rated load can be reduced by virtue of a reduced load acting on the guided parts 44 and the guide rails 5. With the linear motor L according to the present embodiment, lightweight and small elements can be selected as the guided parts 44 guided by the guide rails 5. As a result, by attaching small and lightweight guided parts 44 to part of the movable element 4, a further greater acceleration of the movable element 4 can be achieved. In particular, the linear motor L according to the present embodiment employs the movable element 4 including a plurality of guided parts 44 being spaced apart from one another. Since unbalanced magnetic suction can be prevented or suppressed, loads acting on respective parts of the guide rails 5 with which the guided parts 44 are in contact can be prevented from being greatly varied. Thus, while securing the smooth linear movement of the whole movable element 4 via the guided parts 44, an increase in the life and a reduction in size of the guided parts 44 and the guide rails 5 can be realized.

Note that, the specific structure of each part is not limited to the embodiment described above. For example, in the embodiment described above, though holes penetrating in the thickness direction (the direction opposing to the stators via the gaps) has been exemplarily shown as the thinning holes, recesses not penetrating in the thickness direction may be employed as the thinning holes. Further, both the thinning holes penetrating in the thickness direction and the thinning holes not penetrating in the thickness direction may be used in combination.

The holder is just required to be nonmagnetic, and can be formed by a nonmagnetic material without being limited to resin.

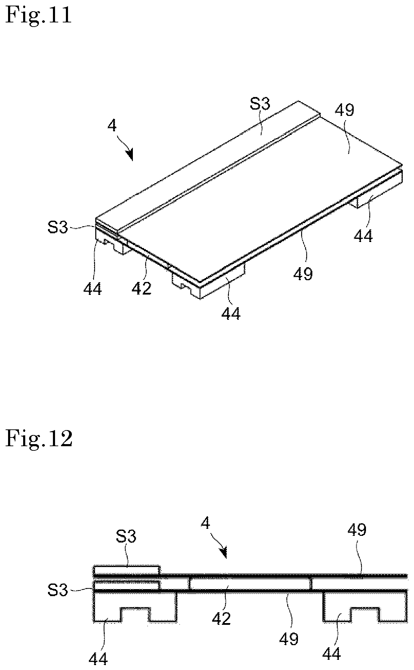

Further, in the embodiment described above, as the nonmagnetic reinforcing part enhancing rigidity of the holder, the case including the holder storing part has been exemplarily shown. However, in a non-inventive variation the reinforcing part may be implemented by nonmagnetic plate-like members covering the surfaces of the holder that oppose to the stator. In this case, with the linear motor in which a pair of stators are opposed in the thickness direction of the movable element, for example as shown in Figs. 11 and 12, the structure in which the holder 42 is interposed in the thickness direction between two nonmagnetic plate-like members (flat plates) 49 respectively covering the surfaces of the holder 42 that oppose to the stators (not shown) can be employed. In Figs. 11 and 12, though the structure in which the sensor scale S3 is provided to each of the plate-like members 49 is exemplarily shown, the sensor scale S3 may be provided to only one of the plate-like members 49.

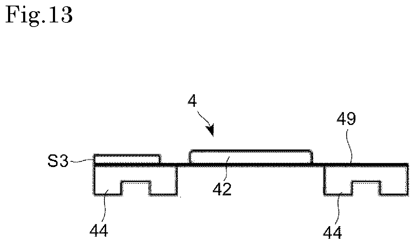

Further, with the linear motor in which the stator is disposed at the position opposing to one of the surfaces of the movable element in the thickness direction, for example as shown in Fig. 13 (non-inventive variation), the reinforcing part can be implemented by one nonmagnetic plate-like member (flat plate) 49 covering the surface of the holder 42 that opposes to the stator (not shown). Note that, in Figs. 11 to 13, the same reference signs are allotted to the part or location corresponding to those in the embodiment described above.

Further, the reinforcing part may be implemented by a site integrally formed with the holder for the purpose of enhancing rigidity of the holder. In the case where such structures are employed, the case is not essential. The movable element without the case will suffice.

Further, in the case where the movable element including the case is employed, the case and the holder can be integrally formed by any appropriate bonding process or the like. Alternatively, the case and the holder may be integrally molded.

When a cutaway part (a through hole, a recess, a notch or a slit opened in a prescribed direction) is formed at part of the member or site functioning as the reinforcing part enhancing rigidity of the holder, it also contributes to a weight reduction of the movable element.

It is also possible to structure the reinforcing part by nonmagnetic plate-like members covering the surfaces of the holder not opposing to the stator (the side surfaces or the end surfaces in the movement direction). Alternatively, the reinforcing part can also be implemented by a nonmagnetic reinforce member provided at the opened edge of the holding holes or the thinning holes in the holder or by a nonmagnetic rib formed inside each of the thinning holes.

Further, as the material of the holder and the case, glass fiber reinforced plastics (GFRP), stainless steel, titanium, ceramic or the like may be employed. These materials are all nonmagnetic, and furthermore, insulating, small in specific gravity, and high in rigidity. Therefore, these materials are suitable for exhibiting the functions required of the holder and the case.

Further, the linear motor including one stator and one movable element may also be contemplated. In this case, by providing the movable element with portions (yokes) forming a magnetic path continuously through the second magnetic pole teeth adjacent to each other in the movement direction, a smooth flow of the magnetic flux can be secured between the stator and the movable element disposed in one-to-one relationship.

The guide mechanism that guides the movement in the linear direction of the movable element may be implemented by any structure or mechanism, in addition to the above-described combination of the guide rails and the guided parts.

Further, in the embodiment described above, the structure in which the holding hole and the thinning hole are alternately formed in the holder along the movement direction, and the boundary portion between the holding hole and the thinning hole adjacent to each other in the movement direction in the holder is allowed to function as the positioning part in the movement direction of the second magnetic pole teeth has been exemplarily shown. However, it is also possible to employ the holder in which the holding holes and the thinning holes are formed at random (without regularity) along the movement direction, or in which the holding holes and the thinning holes are formed with a certain regularity along the movement direction (for example, in a pattern including one thinning hole for every n-pieces of the holding holes n (n is an integer equal to or greater than 2), a pattern including one holding hole for every thinning hole (n is an integer equal to or greater than 2), a pattern including m-pieces of the thinning holes (m is an integer equal to or greater than 2, and m may be equal to or different from n) for every n-pieces of the holding holes (n is an integer equal to or greater than 2), or a pattern including m-pieces of the holding holes (m is an integer equal to or greater than 2, and m may be equal to or different from n) for every n-pieces of the thinning hole n (n is an integer equal to or greater than 2). In this manner, in the case where the holder in which the holding hole and the thinning hole are not alternately formed along the movement direction is employed, in the movement direction in the holder, a boundary portion where the holding hole and the thinning hole are adjacent to each other, a boundary portion where the holding holes are adjacent to each other, and a boundary portion where the thinning holes are adjacent to each other are formed. Out of the foregoing boundary portions, the boundary portion where the holding hole and the thinning hole are adjacent to each other and the boundary portion where the holding holes are adjacent to each other should be allowed to function as the positioning part in the movement direction of the second magnetic pole teeth held by the holding holes.

Further, in the case where the movable element has only one second magnetic pole tooth, the holder provided with just one holding hole will suffice. Then, the boundary portion between the holding hole holding the second magnetic pole tooth and a hole (the thinning hole or another holding hole not holding the second magnetic pole tooth) adjacent to the holding hole in the movement direction should be allowed to function as the positioning part in the movement direction of the second magnetic pole tooth held by the holding hole.

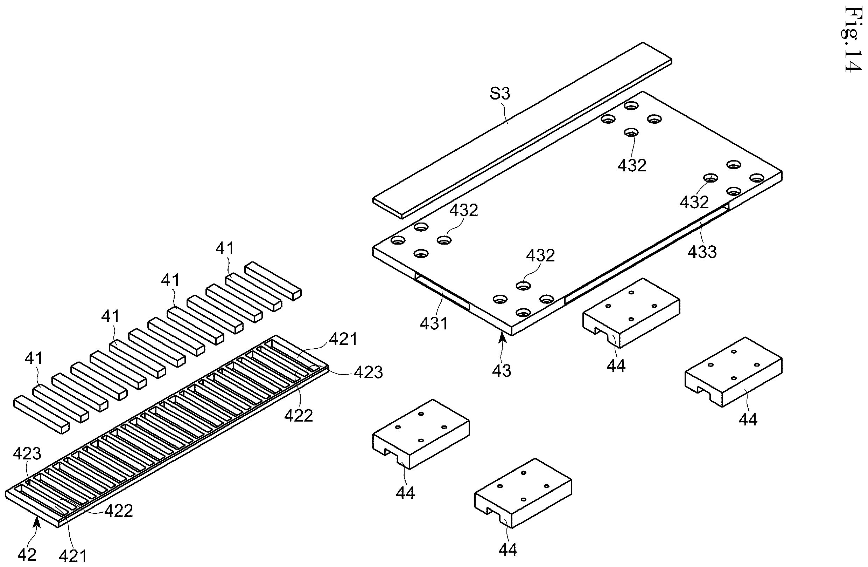

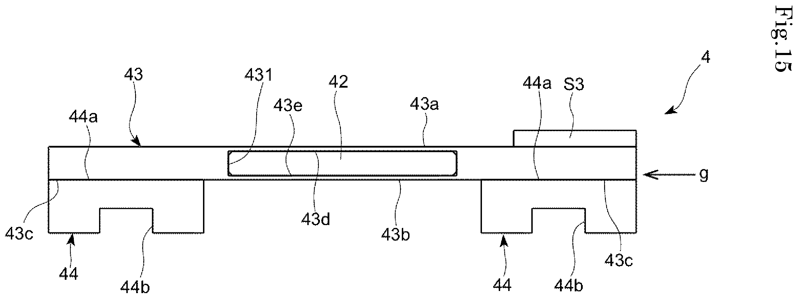

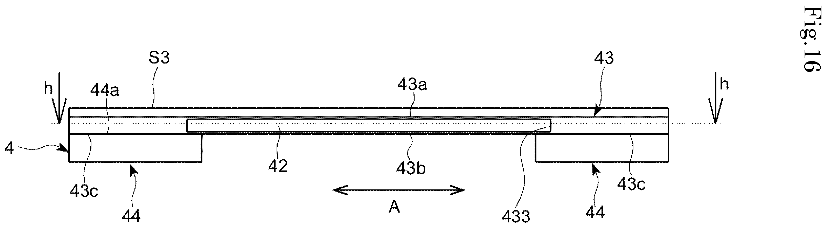

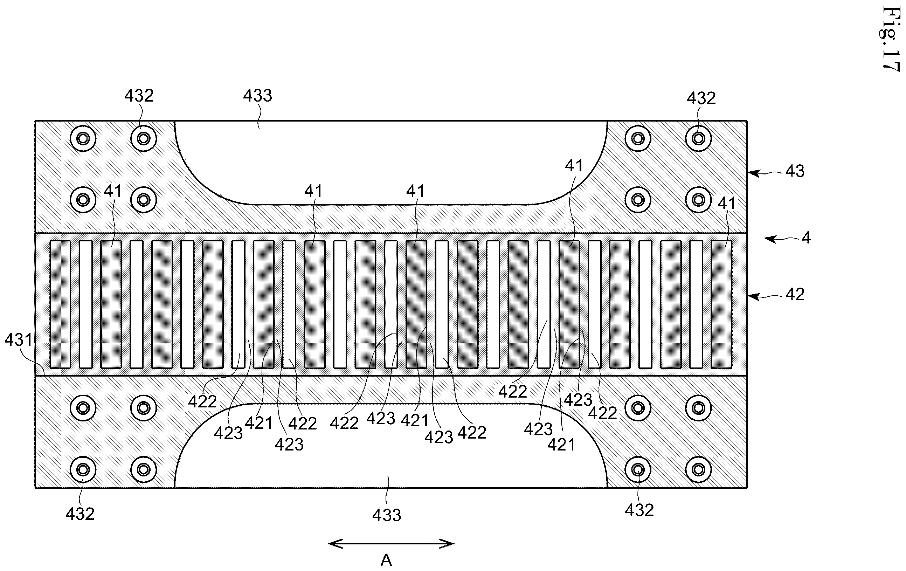

Hereinafter, a description will be given of the second embodiment. In connection with the linear motor according to the second embodiment, as shown in Figs. 1 to 3, Fig. 7, and Figs. 14 to 17 (Fig. 14 is an exploded perspective view of the movable element 4, Fig. 15 is an overall view of the movable element 4 as seen from the movement direction A, Fig. 16 is a side view of the movable element 4 (a view on arrow g in Fig. 15), and Fig. 17 is a cross-sectional view taken along line h-h in Fig. 16), the movable element 4 includes a plurality of second magnetic pole teeth 41 disposed at a prescribed pitch along the movement direction A and capable of forming a magnetic field, and a reinforcing part that enhances the rigidity of the nonmagnetic holding member holding the plurality of second magnetic pole teeth 41. The surfaces opposing to the upper stator 2 and the lower stator 3 are smoothly formed. In the present embodiment, the dimension of the movable element 4 in the movement direction A is set to a length corresponding to one set of the upper stator 2 and the lower stator 3.

In the present embodiment, as the holding member, the nonmagnetic holder 42 that holds the plurality of second magnetic pole teeth 41 is employed. The holder 42 is an integrally molded product made of, for example, resin, in which the holding holes 421 holding the second magnetic pole teeth 41 without any clearance and hollow thinning holes 422 are alternately formed along the movement direction A. In the present embodiment, holes penetrating in the thickness direction are employed as the holding holes 421 and the thinning holes 422. Both the holding holes 421 and the thinning holes 422 are elongated in the width direction of the holder 42 and substantially quadrangular in a cross section taken in parallel to the thickness direction. With the movable element 4 of the present embodiment, the opening dimension of the holding hole 421 in the movement direction A is set to be greater than the opening dimension of the thinning hole 422 in the movement direction A. Note that, the opening dimension of the thinning hole 422 in the movement direction A may be set to be greater than the opening dimension of the holding hole 421 in the movement direction A.

Then, in a state where the second magnetic pole teeth 41 are held by the holding holes 421 without any clearance, in the holder 42, the boundary portions 423 between the holding holes 421 and the thinning holes 422 adjacent to each other in the movement direction A function as the positioning part of the second magnetic pole teeth 41 in the movement direction A.

The second magnetic pole teeth 41 are formed by steel plates as so-called electromagnetic steel plates, which are ferromagnetic plate members, being laminated in the width direction. Note that, the second magnetic pole teeth 41 obtained by lamination of steel plates as electromagnetic steel plates in the movement direction A may be used. Then, the upper portion of the second magnetic pole teeth 41 held by the holding holes 421 of the holder 42 opposes to the upper first magnetic pole teeth 22, and the lower portion opposes to the lower first magnetic pole teeth 32. Further, each of the second magnetic pole teeth 41 is independent in the movement direction A by the boundary portion 423 between each holding hole 421 and each thinning hole 422 in the holder 42. With the linear motor L including the movable element 4 provided with the second magnetic pole teeth 41 structured and disposed as described above, an eddy current occurring in the movable element 4 is restrained by the magnetic field generated by each of the stators (the upper stator 2 and the lower stator 3). Thus, a reduction in magnetic efficiency can be prevented.

In connection with the linear motor L according to the present embodiment, the reinforcing part is structured by the case 43 that can store the holder 42 holding the second magnetic pole teeth 41. The case 43 includes the holder storing part 431 capable of storing the holder 42 inside. The case 43 is a plate-like nonmagnetic component whose face-up surface and face-down surface are smoothly formed. The case 43 is required to be, in addition to nonmagnetic, insulating, small in specific gravity, and high in rigidity. In the present embodiment, as a material that satisfies all the requirements, CFRP (carbon fiber reinforced plastics) is employed. That is, the linear motor L according to the present embodiment employs the movable element 4 including the case 43 being an integrally molded product made of CFRP. The case 43 includes stator opposing surfaces 43a and 43b that are disposed at the positions nearer to the stators 2 and 3 in the thickness direction (the direction in which the movable element 4 and the stators 2 and 3 oppose to each other via gaps) than the surface of the second magnetic pole teeth 41 opposing to the stators 2 and 3, and guided part attaching surfaces 43c to which the guided parts 44 guided by the guide rails 5 are attached. Here, the stator opposing surfaces 43a and 43b can be regarded as the surfaces preferentially opposing to the stators 2 and 3 in the thickness direction (the direction in which the movable element 4 and the stators 2 and 3 oppose to each other via gaps) than the surface of the second magnetic pole teeth 41 opposing to the stators 2 and 3. Since the linear motor L according to the present embodiment employs the arrangement in which the movable element 4 is interposed between the upper stator 2 and the lower stator 3 in the thickness direction, the stator opposing surfaces 43a and 43b are respectively set to the face-up surface and face-down surface of the case 43. More specifically, in connection with the linear motor L according to the present embodiment, the surface, in the face-up surface of the case 43, that overlaps the holder 42 in the thickness direction, and the surface, in the face-down surface of the case 43, that overlaps the holder 42 in the thickness direction are allowed to function as the upper stator opposing surface 43a and the lower stator opposing surface 43b, respectively. Here, in the case 43, when the surface that covers the surface, in the second magnetic pole teeth 41, that opposes to the upper stator 2 (in the present embodiment, the surface, in the second magnetic pole teeth 41, that opposes to the upper stator 2 is on an identical plane or a substantially identical plane to the face-up surface of the holder 42), in other words, the surface that is directly in contact with the surface, in the second magnetic pole teeth 41, that opposes to the upper stator 2, is an upper covering surface 43d, the upper stator opposing surface 43a and the upper covering surface 43d are in the front-back relationship. Similarly, in the case 43, when the surface that covers the surface, in the second magnetic pole teeth 41, that opposes to the lower stator 3 (in the present embodiment, the surface, in the second magnetic pole teeth 41, that opposes to the lower stator 3 is on an identical plane or a substantially identical plane to the face-down surface of the holder 42), in other words, the surface that is directly in contact with the surface, in the second magnetic pole teeth 41, that opposes to the lower stator 3 is a lower covering surface 43e, the lower stator opposing surface 43b and the lower covering surface 43e are in the front-back relationship. Then, in connection with the linear motor L according to the present embodiment, the stator opposing surfaces 43a and 43b that form flat planes are set to be in parallel to the surfaces of the first magnetic pole teeth 22 and 32 of the stators (the upper stator 2 and the lower stator 3) that oppose to the movable element 4.

The holder storing part 431 in the case 43 is opened to the outside in the movement direction A. In a state where the holder 42 is stored in the holder storing part 431, the end of the case 43 and the end of the holder 42 in the movement direction A are aligned with each other. Here, the upper covering surface 43d and the lower covering surface 43e of the case 43 refers to the surfaces defining the space of the holder storing part 431 and the surfaces opposing to each other in the thickness direction (in the height direction). Further, the width dimension of the case 43 is greater than the width dimension of the holder 42. At the center in the width direction of the case 43, the holder storing part 431 is formed. At the portions where the holder storing part 431 is not formed (the corner portions of the case 43 in the present embodiment), the guided parts 44 can be attached. With the case 43 according to the present embodiment, the guided parts 44 are fixed to the four corners at the face-down surface of the case 43 using the screw insert holes 432 formed at the four corners of the case 43. That is, the four corners at the face-down surface of the case 43 function as the guided part attaching surfaces 43c for attaching the guided parts 44. Here, in the present embodiment, since the entire face-down surface of the case 43 is smoothly formed, the guided part attaching surfaces 43c are also smooth. Further, in the case 43, the guided part attaching surfaces 43c, and the stator opposing surface (the lower stator opposing surface 43b) opposing to the lower stator 3 are flat smooth surfaces formed on an identical plane.

In connection with each of the guided parts 44, a surface 44a to be in contact with the face-down surface of the case 43 is set to be a smooth surface. Each guided part 44 is provided with a guide engaging part 44b capable of engaging with the guide rail 5 while clamping the guide rail 5 in the width direction. In connection with the linear motor L according to the present embodiment, by one guide rail 5, two guided parts 44 disposed to be away from each other by a prescribed dimension along the movement direction A are guided.

Further, at the face-up surface of the case 43, the sensor scale S3 extending in the movement direction A is fixed by any appropriate scheme. The sensor scale S3 is disposed in a region in the face-up surface of the case 43 so as not to overlap the holder storing part 431 in a plan view. By the sensor scale S3 being read by the sensor head S2 provided at the housing 1, the position of the movable element 4 can be grasped.

In connection with the linear motor L according to the present embodiment, at the case 43, the thinning parts 433 are formed at sites not contributing to storage of the holder 42 and not contributing to attachment of the guided parts 44. Specifically, as shown in Fig. 17, at the case 43, the thinning parts 433 respectively opened only at the sides of the case 43 are formed at the portions between which the holder storing part 431 can be interposed in the width direction.

The case 43 structured in this manner exhibits the function as a reinforcing part that enhances rigidity of the holder 42. Further, as described above, a region in the face-up surface of the case 43 that overlaps the holder storing part 431 in a plan view functions as the upper stator opposing surface 43a. A region in the face-down surface of the case 43 that overlaps the holder storing part 431 in a plan view functions as the lower stator opposing surface 43b.

Then, in connection with the linear motor L according to the present embodiment, as shown in Fig. 6, between a surface, in the movable element 4, that opposes to the upper stator 2 (specifically, in the face-up surface of the case 43, the surface that overlaps the holder storing part 431 in a plan view) and the upper stator 2, and between a surface opposing to the lower movable element 43 (specifically, in the face-up surface of the case 43, the surface that overlaps the holder storing part 431 in a plan view) and the lower stator 3, gaps (magnetic gaps) of a prescribed identical dimension are respectively formed.

In the linear motor L according to the present embodiment including the movable element 4, the upper stator 2, and the lower stator 3 set to such relative positional relationship, the magnetic force acting on the movable element 4 by the upper stator 2 and the lower stator 3 are balanced in the height direction, and any force other than in the movement direction A substantially does not act on the movable element 4.

In the linear motor L structured in this manner, the upper first magnetic pole teeth 22 and the lower first magnetic pole teeth 32 opposing to each other in the height direction are different in polarity. A not-shown control unit allows three-phase alternating current to pass through the coils C in a prescribed pattern. Thus, a magnetic circuit of various patterns including the stators (the upper stator 2 and the lower stator 3) and the movable element 4 is formed; in each of the gaps between the movable element 4 and the stators (the upper stator 2 and the lower stator 3), an alternating magnetic flux passes among the upper first magnetic pole teeth 22, the second magnetic pole teeth 41, and the lower first magnetic pole teeth 32; and suction is generated between the upper first magnetic pole teeth 22 and the second magnetic pole teeth 41, and between the second magnetic pole teeth 41 and the lower first magnetic pole teeth 32. Thus, thrust can be generated at the movable element 4.

As described above, the linear motor L according to the present embodiment employs the movable element 4 that functions as the secondary side member disposed at the position opposing to the stators (the upper stator 2 and the lower stator 3) that function as the primary side magnetic field generating members and that are provided with the first magnetic pole teeth (the upper first magnetic pole teeth 22 and the lower first magnetic pole teeth 32) capable of forming a magnetic field at a prescribed pitch along the movement direction A of the movable element 4, the stators further having the coils C. The employed movable element 4 includes the second magnetic pole teeth 41 disposed at a prescribed pitch along the movement direction A and capable of forming a magnetic field, and the case 43 functioning as the reinforcing part that enhances rigidity of the nonmagnetic holding member (the holder 42) holding the plurality of second magnetic pole teeth 41. Accordingly, even in the case where the first magnetic pole teeth and the holding member (the holder 42) are formed thin in order to achieve a weight reduction of the movable element 4, rigidity of the entire movable element 4 can be enhanced by the case 43. Further, in the case 43, the stator opposing surfaces 43a and 43b opposing to the stators (the upper stator 2 and the lower stator 3) are smoothly formed and set to be in parallel to the surfaces of the first magnetic pole teeth 22 and 32 opposing to the movable element 4. Accordingly, between the stators (the upper stator 2 and the lower stator 3) and the movable element 4, gaps of a uniform prescribed dimension without any unevenness can be secured. Further, torque is improved, and a normal operation of causing the movable element 4 to linearly move relative to the stators 2 and 3 can be secured. Furthermore, when the thickness of the case 43 is set to be small, a reduction in the thickness of the entire movable element 4 can be attained. Thus, the movable element 4 being thinner than a conventional movable element while possessing excellent rigidity by virtue of the case 43 can be realized. As a result, it becomes possible to provide the linear motor L being excellent in practicality and functionality including the movable element 4 that can realize high acceleration with reduced size and weight while a reduction in thrust is suppressed to a minimum. Further, with a conventional linear motor, suction acts on a portion in the stator that is relatively near to the movable element due to tolerances during assembly or manufacture. With such a movable element, when the weight is reduced, it is expected that the degree of deflection deformation becomes great due to such unbalanced suction. In contrast, the linear motor L according to the present embodiment employs the structure of preventing the deflection of the nonmagnetic holding member 42 holding the second magnetic pole teeth 41 by the case 43 being the reinforcing part. Accordingly, the deflection of the movable element 4 attributed to the unbalanced suction can also be prevented or suppressed.

Furthermore, the linear motor L according to the present embodiment employs the structure in which the movable element 4 is linearly moved while the guide rails 5 are caused to guide the guided parts 44. Thus, while the stable operation of the movable element 4 is maintained, an occurrence of a biased load acting on the guided parts 44 and the guide rails 5 due to unbalanced magnetic suction is prevented or suppressed. Thus, the life of the linear guide mechanism made up of the guided parts 44 and the guide rails 5 can be increased. Further, with the linear motor L according to the present embodiment, it is not necessary to increase the size of the guided parts 44 and the guide rails 5 so as to be capable of withstanding a biased load. Hence, a reduction in size of the whole linear guide mechanism structured by using the guided parts 44 and the guide rails 5 can also be achieved. Further, since the linear motor L according to the present embodiment can solve the unbalanced magnetic suction, as compared to the structure associated with the unbalanced magnetic suction, the rated load can be reduced by virtue of a reduced load acting on the guided parts 44 and the guide rails 5. With the linear motor L according to the present embodiment, lightweight and small elements can be selected as the guided parts 44 guided by the guide rails 5. As a result, by attaching small and lightweight guided parts 44 to part of the movable element 4, a further greater acceleration of the movable element 4 can be achieved. In particular, the linear motor L according to the present embodiment employs the movable element 4 including a plurality of guided parts 44 being spaced apart from one another. Since unbalanced magnetic suction can be prevented or suppressed, loads acting on respective parts of the guide rails 5 with which the guided parts 44 are in contact can be prevented from being greatly varied. Thus, while securing the smooth linear movement of the whole movable element 4 via the guided parts 44, an increased life and a reduction in size of the guided parts 44 and the guide rails 5 can be realized.

Additionally, in connection with the linear motor L according to the present embodiment, the guided parts 44 guided by the guide rails 5 fixed at the positions not interfering with the stators (the upper stator 2 and the lower stator 3) can be attached to the guided part attaching surfaces 43c set at part of the case 43. Accordingly, it is not necessary to provide the movable element with dedicated members for attaching the guided parts 44 to the movable element 4 separately from the case 43. Thus, a reduction in the number of components can be achieved. Further, in the guided parts 44, the surfaces being in contact with the guided part attaching surfaces 43c and the guided part attaching surfaces 43c of the case 43 are formed to be flat smooth surfaces being parallel to each other. Accordingly, the attachment work of the guided part 44 to the case 43 can be simplified, and an excellent attachment state of the guided parts 44 to the case 43 can be maintained. In particular, with the linear motor L according to the present embodiment, since the guided part attaching surfaces 43c are formed at an identical plane to the stator opposing surface (the lower stator opposing surface 43b), as compared to the mode in which the guided part attaching surfaces and the stator opposing surface are formed at different planes, it is advantageous in that workability is excellent, and high working precision and dimension accuracy can be easily secured.

Further, with the linear motor L according to the present embodiment, the guided parts 44 guided by the guide rails 5 fixed at the positions not interfering with the stators (the upper stator 2 and the lower stator 3) can be attached to the guided part attaching surfaces 43c being set to the portions of the case 43 not opposing to the stators (the upper stator 2 and the lower stator 3) (the portions not overlapping the stators 2 and 3 in a plan view). Accordingly, the guide rails 5 and the guided parts 44 are disposed at the positions not coinciding with the path of the magnetic flux that passes the first magnetic pole teeth (the upper first magnetic pole teeth 22 and the lower first magnetic pole teeth 32) of the stators (the upper stator 2 and the lower stator 3) and the second magnetic pole teeth 41 of the movable element 4. Thus, when the coils C are energized, a stable operation of the movable element 4 can be maintained by allowing the guided parts 44 to be guided by the guide rails 5 while the magnetic flux density between the stators (the upper stator 2 and the lower stator 3) and the movable element 4 is maintained at an intended value.

Further, in connection with the linear motor L according to the present embodiment, the thinning parts 433 are formed at the sites of the case 43 not contributing to storage of the holder 42 and not contributing to attachment of the guided parts 44. Accordingly, while securing the excellent storage state of the holder 42 in the case 43 and the excellent attachment state of the guided parts 44 to the case 43, a weight reduction of the movable element 4 can be achieved.

In particular, in connection with the linear motor L according to the present embodiment, the movable element 4 is disposed at the position being interposed between two stators (the upper stator 2 and the lower stator 3) via prescribed gaps in the thickness direction (the height direction). Accordingly, in the case where a magnetic circuit that includes the stators (the upper stator 2 and the lower stator 3) and the movable element 4 is formed in order to provide thrust to the movable element 4, it becomes possible to cause the magnetic flux flowing from the first magnetic pole teeth of one stator to the second magnetic pole teeth 41 of the movable element 4 to pass through the first magnetic pole teeth of another stator without passing through any part of the movable element 4 other than the second magnetic pole teeth 41. Thus, as compared to the structure in which the second magnetic pole teeth 41 adjacent to each other are continuously structured via a yoke in the movement direction A of the movable element 4, the leakage flux that can be generated inside the movable element 4 can be relatively reduced. Thus, the density of the magnetic flux that passes through the movable element 4 and the stators (the upper stator 2 and the lower stator 3) can be further increased, thereby increasing the thrust provided to the movable element 4. Thus, even with power of an identical amount, it becomes possible to further increase the acceleration of the movable element 4 and to accelerate reaction.

Further, the specific structure of each part is not limited to the embodiments described above. For example, in accordance with the shape of the guide rails and the guided parts, in the case where each guided part attaching surface should be set to the surface nearer to the stator than the stator opposing surface or to the surface farther from the stator than the stator opposing surface, the guided part attaching surface and the stator opposing surface may be formed at surfaces of different heights (different levels).

Still further, in each of the guided part, when unevenness (including a curved surface) is present at the entire or part of the surface brought into contact with the guided part attaching surface, the shape of each guided part attaching surface should also be changed as appropriate so as to conform to such a shape, such that an excellent attachment state without any wobble is realized between the guided part and the guided part attaching surface.

Still further, the reinforcing part except for each stator opposing surface (including each guided part attaching surface) may have an uneven shape (a shape not being smooth).

Still further, the stator opposing surface and the guided part attaching surface may be differently oriented.

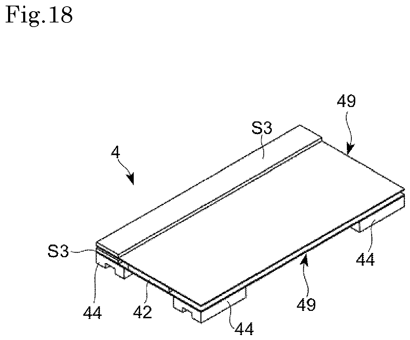

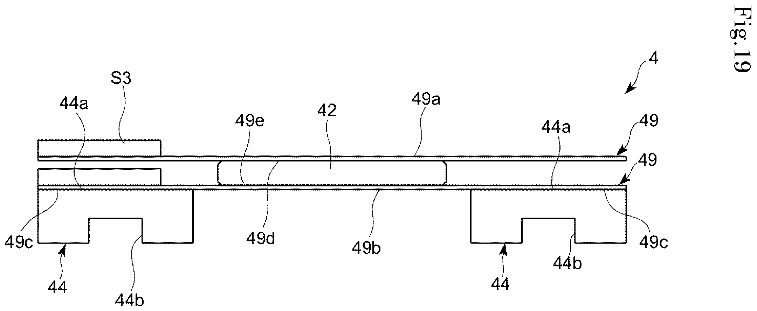

Still further, in the embodiment described above, though the case has been exemplarily shown as the reinforcing part, in a non-inventive variation the reinforcing part may be implemented by a nonmagnetic plate-like member covering the surface of the second magnetic pole teeth opposing to the stator. In this case, with the linear motor in which a pair of stators are opposed in the thickness direction of the movable element, for example as shown in Figs. 18 and 19, the reinforcing part is implemented by two nonmagnetic plate-like members (flat plates) 49 respectively covering the surfaces of the holding member (holder 42) opposing to the stators (not shown). In the plate-like members 49 functioning as the reinforcing part, the surfaces in the front-back relationship with the surfaces being in direct contact with the second magnetic pole teeth 41 and covering the second magnetic pole teeth 41 (an upper covering surface 49d and a lower covering surface 49e) are the stator opposing surfaces (an upper stator opposing surface 49a and a lower stator opposing surface 49b). The surfaces to which the guided parts 44 are attached are guided part attaching surfaces 49c. Note that, in Figs. 18 and 19, the structure in which the sensor scale S3 is provided to each of the plate-like members 49 is exemplarily shown. However, the sensor scale S3 may be provided to only one of the plate-like members 49.

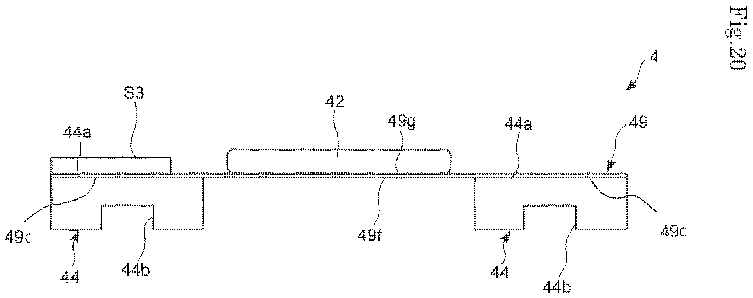

Still further, with the linear motor in which the stator is disposed at the position opposing to one of the surfaces of the movable element in the thickness direction, for example as shown in Fig. 20 (non-inventive variation), the reinforcing part can be implemented by one nonmagnetic plate-like member (flat plate) 49 covering the surface, in the second magnetic pole teeth 41, opposing to the stator (not shown). In the plate-like member 49 functioning as the reinforcing part, the surfaces in the front-back relationship with the surface being in direct contact with the second magnetic pole teeth 41 and covering the second magnetic pole teeth 41 (the upper covering surface 49d and the lower covering surface 49e) are the stator opposing surfaces (the upper stator opposing surface 49f and the lower stator opposing surface 49g), and the surfaces to which the guided parts 44 are attached are the guided part attaching surfaces 49c. Note that, in Figs. 18 to 20, identical reference signs are allotted to the parts or locations corresponding to the embodiments described above.

Still further, in order to enhance rigidity of the holding member, the reinforcing part may be implemented by the site integrally formed with the holding member. For example, the holding member and the reinforcing part can be integrally or substantially integrally structured by injection molding or a bonding process.

Still further, in the case where the reinforcing part enhancing rigidity of the holding member is structured by the case, as the thinning parts formed at the case, holes penetrating in a prescribed direction of the case (the thickness direction or the width direction), notches or slits opened in a prescribed direction, or recesses may be employed. The number of the thinning parts or the location of the thinning parts can be changed or selected as appropriate.

The holding member and the reinforcing part are just required to be nonmagnetic, and can be formed by any appropriate nonmagnetic material, without being limited to resin and GFRP. The material of the holding member and the reinforcing part may be glass fiber reinforced plastics (GFRP), stainless steel, titanium, ceramic or the like. These are all nonmagnetic. Further, these materials are insulating, small in specific gravity, and high in rigidity, and therefore suitable for exhibiting the functions required of the holding member and the reinforcing part.

In the embodiment described above, as the thinning holes formed at the holder, holes penetrating in the thickness direction (the direction opposing to the stators via gaps) have been exemplarily shown. However, recesses not penetrating in the thickness direction may be employed as the thinning holes. Further, both the thinning holes penetrating in the thickness direction and the thinning holes not penetrating in the thickness direction may be employed in combination. Alternatively, the holder may not be provided with any thinning holes.

Further, the linear motor including one stator and one movable element may be employed. In this case, by providing the movable element with a portion (a yoke) forming a magnetic path continuously through the second magnetic pole teeth adjacent to each other in the movement direction, a smooth flow of the magnetic flux can be secured between the stator and the movable element disposed in one-to-one relationship.

The structure in which a single or three or more guided parts are guided by one guide rail, or the structure in which, in the whole linear motor, one or three or more guide rails are disposed at the position not interfering with the stators may be employed.

The holding member (not part of the invention) is not limited to the holder having the shape described in the embodiments, and the shape may be changed in various manners in accordance with the shape or number of the second magnetic pole teeth. The holding member (not part of the invention) can also be structured by a component other than the holder. The holding member may be integrally molded with the reinforcing part, or may be integrally structured with the reinforcing part by any appropriate process.

Still further, in both the first and second embodiments, in the state as seen from the direction in which the movable element and the stators oppose to each other, both of or one of the first magnetic pole teeth and the second magnetic pole teeth can be disposed in an attitude inclined by a prescribed angle to the movement direction of the movable element (skew attitude) and at a constant pitch.

The specific structure of other parts is also not limited to the embodiments described above, and various changes can be made without departing from the scope of the present invention as defined in the claims.

### INDUSTRIAL APPLICABILITY

The present invention realizes a weight reduction, stability in a fast-speed operation, and reinforcement of rigidity of particularly the movable element in the linear motor. The present invention largely contributes to the fields of small component conveying apparatuses, moving apparatuses for devices and the like, in which the linear motor is used.

### REFERENCE SIGNS LIST

2, 3: Stator (upper stator, lower stator)
22, 32: First magnetic pole tooth (upper first magnetic pole tooth, lower first magnetic pole tooth)
4: Movable element
41: Second magnetic pole tooth
42: Holding member, holder
421: Holding hole
422: Thinning hole
423: Boundary portion
43, 49: Reinforcing part (case, flat plate)
43a, 43b: Stator opposing surface (upper stator opposing surface, lower stator opposing surface)
43c: Guided part attaching surface
431: Holder storing part
433: Thinning part
44: Guided part
49: Reinforcing part (plate-like member)
49a, 49b: Stator opposing surface (upper stator opposing surface, lower stator opposing surface)
49c: Guided part attaching surface
49f: Stator opposing surface
5: Guide rail
C: Coil
L: Linear motor

## Claims

1. A linear motor (L) comprising:
a stator (2, 3) as a primary side magnetic field generating member having a coil (C);
a movable element (4) as a secondary side member disposed at a position opposing to the stator (2, 3) via a prescribed gap and capable of moving in a linear direction (A) relative to the stator (2, 3); and
a guide rail (5) provided near the stator (2, 3) and capable of guiding the movable element (4) in a movement direction (A) wherein
the stator (2, 3) includes a plurality of first magnetic pole teeth (22, 32) capable of forming a magnetic field and disposed at a prescribed pitch along the movement direction (A) of the movable element (4),
the movable element (4) has a thickness direction corresponding to an opposing direction to the stator (2, 3) and a perpendicular direction to the movement direction (A), and includes a plurality of second magnetic pole teeth (41) disposed at a prescribed pitch along the movement direction (A) capable of forming a magnetic field and a nonmagnetic reinforcing part (43) that enhances rigidity of a nonmagnetic holder (42) holding the second magnetic pole teeth (41),
the reinforcing part (43) is structured by a nonmagnetic case (43) capable of storing the holder (42) and enhancing rigidity of the holder (42),
the case (43) includes a stator opposing surface (43a, 43b) disposed at a position nearer to the stator (2, 3) in the thickness direction than at least a surface of the second magnetic pole teeth (41), and a covering surface (43d, 43e) in the front-back relationship with the stator opposing surface (43a, 43b) in the thickness direction covers the surface of the second magnetic pole teeth (41) opposing to the stator (2, 3) directly contacted with, the case (43) further including a plurality of guided part attaching surfaces (43c) to which a plurality of guided parts (44) guided by the guide rail (5) is attached, and
at least the stator opposing surface (43a, 43b) is smoothly formed and the stator opposing surface (43a, 43b) is in parallel to a surface of the first magnetic pole teeth (22, 32), the surface of the first magnetic pole teeth (22, 32) opposing to the movable element (4),
the guided part attaching surfaces (43c) are parallel to the stator opposing surfaces (43a and 43b) or on an identical plane, and perpendicular to the opposing direction of the stator (2, 3),
the guided part attaching surfaces (43c) are arranged perpendicular to the opposing direction of the movable element (4) and the stator (3),
the guided parts (44) and the guided part attaching surfaces (43c) are arranged perpendicular to the movement direction (A) of the movable element (4).

2. The linear motor (L) according to claim 1, wherein all of the guided part attaching surfaces (43c) are formed on an identical plane.

3. The linear motor (L) according to claim 2, wherein the stator opposing surfaces (43a, 43b) are formed on the same plane as all of the guided part attaching surfaces (43c).

4. The linear motor (L) according to any one of claims 1 to 3, wherein, in the guided part (44), surfaces in the guided parts (44) brought into contact with the guided part attaching surface (43c) and the guided part attaching surfaces (43c) are smoothly formed.

5. The linear motor (L) according to any one of claims 1 to 4, wherein, in the case (43), a thinning part (433) is formed at a site not contributing to storage of the holder (42) and not contributing to attachment of the guided part (44).

6. The linear motor (L) according to any one of claims 1 to 5, wherein the movable element (4) is disposed at a position being interposed between two pieces of the stators (2, 3) in a thickness direction via prescribed gaps.

7. The linear motor (L) according to claim 6, wherein the two pieces of the stators (2,3) are an upper stator (2) and a lower stator (3).

8. The linear motor (L) according to any one of claims 1 to 7, wherein in the holder (42), a holding hole (421) holding the second magnetic pole teeth (41) without any clearance and penetrating in a thickness direction and a hollow thinning hole (422) are alternately formed along the movement direction (A), and
in the holder (42), a boundary portion (423) between the holding hole (421) and the thinning hole (422) or another holding hole (421) adjacent to the holding hole (421) in the movement direction (A) is allowed to function as a positioning part in the movement direction (A) of the second magnetic pole teeth (41) held by the holding hole (421).

9. The linear motor (L) according to any one of claims 1 to 8, wherein the thinning hole (422) is a hole penetrating the holder (42) in a thickness direction.

10. The linear motor (L) according to any one of claims 1 to 9, wherein on the side on which the guided parts (44) of the case (43) are attached, the stator opposing surface (43b) is arranged between the guided part attaching surfaces (43c) in the perpendicular direction to the movement direction (A) of the movable element (4).

## Patentansprüche

1. Ein linearer Motor (L), umfassend:
einen Stator (2, 3) als ein auf einer primären Seite ein magnetisches Feld erzeugendes Teil mit einer Spule (C);
ein bewegliches Element (4) als ein Teil auf einer zweiten Seite, das an einer dem Stator (2, 3) gegenüberliegenden Stelle in einem vorgeschrieben Zwischenraum angeordnet ist und sich in einer linearen Richtung (A) relativ zu dem Stator (2, 3) bewegen kann; und
eine Führungsschiene (5), die in der Nähe des Stators (2, 3) bereitgestellt ist und in der Lage ist, das bewegliche Element (4) in einer Bewegungsrichtung (A) zu führen, worin
der Stator (2, 3) eine Vielzahl von ersten magnetischen Polzähnen (22, 32) beinhaltet, die in der Lage sind, ein magnetisches Feld zu erzeugen und die in einem vorgeschriebenen Abstand entlang der Bewegungsrichtung (A) des beweglichen Elementes (4) angeordnet sind,
das bewegliche Element (4) eine Dickenrichtung hat, die einer entgegen gesetzten Richtung zu dem Stator (2, 3) entspricht, und einer Richtung senkrecht zu der Bewegungsrichtung (A), und eine Vielzahl von zweiten magnetischen Polzähnen (41) beinhaltet, die in einem vorgegebenen Abstand entlang der Bewegungsrichtung (A) angeordnet sind, die in der Lage sind, ein magnetisches Feld zu erzeugen, und ein nichtmagnetisches verstärkendes Teil (43), welches die Steifigkeit eines nichtmagnetischen Halters (42) verstärkt, der die zweiten magnetischen Polzähne (41) trägt,
der verstärkende Teil (43) strukturiert ist durch ein nichtmagnetisches Gehäuse (43), das in der Lage ist, den Halter (42) zu lagern und die Steifigkeit des Halters (42) zu verstärken,
das Gehäuse (43) eine dem Stator gegenüberliegende Oberfläche (43a, 43b) enthält, die an einer Stelle angeordnet ist, die in der Dickenrichtung näher am Stator (2, 3) ist als mindestens eine Oberfläche der zweiten magnetischen Polzähne (41), und eine bedeckende Oberfläche (43d, 43e) in der Vorderseite-Rückseite - Beziehung in der Dickenrichtung mit der dem Stator gegenüberliegenden Oberfläche (43a, 43b) die Oberfläche der zweiten magnetischen Polzähne (41) bedeckt, die dem Stator (2, 3) gegenüberliegend mit ihm direkt kontaktiert sind, wobei das Gehäuse (43) zusätzlich eine Vielzahl von das geführte Teil anbringenden Oberflächen (43c) enthält, an welchen eine Vielzahl von geführten Teilen (44), die durch die Führungsschiene (5) geführt werden, angebracht sind, und
zumindest die dem Stator gegenüberliegende Oberfläche (43a, 43b) sanft geformt ist und die dem Stator gegenüberliegende Oberfläche (43a, 43b) parallel zu einer Oberfläche der ersten magnetische Polzähne (22, 32) liegt, wobei die Oberfläche der ersten magnetischen Polzähne (22, 32) dem beweglichen Element (4) gegenüberliegt,
die angebrachten Oberflächen des Führungsteils (43c) parallel zu den dem Stator gegenüberliegenden Oberflächen (43a und 43b) oder auf einer identischen Ebene, und senkrecht zu der entgegengesetzten Richtung des Stators (2, 3) angeordnet sind,
die angebrachten Oberflächen des Führungsteils (43c) senkrecht zu der entgegengesetzten Richtung des beweglichen Elementes (4) und des Stators (3) angeordnet sind,
die geführten Teile (44) und die angebrachten Oberflächen des Führungsteils (43c) senkrecht zur Bewegungsrichtung (A) des beweglichen Elementes (4) angeordnet sind.

2. Der lineare Motor (L) nach Anspruch 1, worin alle angebrachten Oberflächen des Führungsteils (43c) auf einer identischen Ebene gebildet sind.

3. Der lineare Motor (L) nach Anspruch 2, worin die dem Stator gegenüberliegenden Oberflächen (43a, 43b) auf der gleichen Ebene gebildet sind wie alle angebrachten Oberflächen des Führungsteils (43c).

4. Der lineare Motor (L) nach irgendeinem der Ansprüche 1 bis 3, worin in dem geführten Teil (44) Oberflächen in den geführten Teilen (44), die mit der angebrachten Oberfläche des Führungsteils (43c) in Kontakt gebracht sind, und die das geführte Teil anbringenden Oberflächen (43c) (guided part attaching surfaces) leichtgängig geformt sind.

5. Der lineare Motor (L) nach irgendeinem der Ansprüche 1 bis 4, worin in dem Gehäuse (43), ein verdünnendes Teil (thinning part) (433) an einer Stelle gebildet ist, die nicht zur Lagerung des Halters (42) beiträgt und nicht zur Anbringung des geführten Teils (44) beiträgt.

6. Der lineare Motor (L) nach irgendeinem der Ansprüche 1 bis 5, worin das bewegliche Element (4) an einer Position angeordnet ist, die sich über vorgeschriebenen Zwischenräume zwischen zwei Teilen des Stators (2, 3) in einer Dickenrichtung befindet.

7. Der lineare Motor (L) nach Anspruch 6, worin die beiden Stücke der Statoren (2, 3) ein oberer Stator (2) und ein unterer Stator (3) sind.

8. Der lineare Motor (L) nach irgendeinem der Ansprüche 1 bis 7, worin in dem Halter (42) ein Bohrloch (421), das die zweiten magnetische Polzähne (41) ohne Abstand hält und in einer Dickenrichtung vordringt, und ein hohles verdünnendes Loch (hollow thinning hole) (422) abwechselnd entlang der Bewegungsrichtung (A) gebildet sind, und
es in dem Halter (42) einem Grenzteil (423) zwischen dem Bohrloch (421) und dem verdünnenden Loch (422) oder einem anderen Bohrloch (421) in Nachbarschaft zum Bohrloch (421) in der Bewegungsrichtung (A) ermöglicht ist, als ein positionierendes Teil in der Bewegungsrichtung (A) der zweiten magnetischen Polzähne (41) zu funktionieren, die durch das Bohrloch (421) gehalten werden.

9. Der lineare Motor (L) nach irgendeinem der Ansprüche 1 bis 8, worin das verdünnende Loch (422) ein Loch ist, das den Halter (42) in einer Dickenrichtung durchdringt.

10. Der lineare Motor (L) nach irgendeinem der Ansprüche 1 bis 9, worin auf der Seite, auf der die geführten Teile (44) des Gehäuses (43) angebracht sind, die dem Stator gegenüberliegende Oberfläche (43b) zwischen den das geführte Teil anbringenden Oberflächen (43c) (guided part attaching surfaces) (43c) in der senkrechten Richtung zu der Bewegungsrichtung (A) des beweglichen Elementes (4) angeordnet ist.

## Revendications

1. Moteur linéaire (L) comprenant :
un stator (2, 3), servant d'élément de génération de champ magnétique du côté primaire, possédant une bobine (C) ;
un élément mobile (4), servant d'élément de côté secondaire, disposé dans une position s'opposant au stator (2, 3) avec un espacement prescrit et capable de se déplacer dans une direction linéaire (A) par rapport au stator (2, 3) ; et
un rail de guidage (5) placé près du stator (2, 3) et capable de guider l'élément mobile (4) dans une direction de déplacement (A), où
le stator (2, 3) comporte une pluralité de premières dents de pôle magnétique (22, 32) capable de former un champ magnétique et disposée à un niveau prescrit le long de la direction de déplacement (A) de l'élément mobile (4),
l'élément mobile (4) possède une direction de l'épaisseur correspondant à une direction s'opposant au stator (2, 3) et une direction perpendiculaire à la direction de déplacement (A), et comporte un pluralité de secondes dents de pôle magnétique (41) disposée à un niveau prescrit le long de la direction de déplacement (A) capable de former un champ magnétique et une partie de renforcement non magnétique (43) qui améliore la rigidité d'un support non magnétique (42) portant les secondes dents de pôle magnétique (41),
la partie de renforcement (43) est structurée par un compartiment non magnétique (43) capable de stocker le support (42) et améliorant la rigidité du support (42),
la compartiment (43) comporte une surface s'opposant au stator (43a, 43b) disposée dans une position plus proche du stator (2, 3) dans la direction de l'épaisseur qu'au moins une surface des secondes dents de pôle magnétique (41), et une surface de couverture (43d, 43e) en relation avant-arrière avec la surface s'opposant au stator (43a, 43b) dans la direction de l'épaisseur recouvre la surface des secondes dents de pôle magnétique (41) s'opposant au stator (2, 3) directement en contact avec, le compartiment (43) comprenant en outre une pluralité de surfaces de fixation de parties guidées (43c) à laquelle est attachée une pluralité de parties guidées (44) guidée par le rail de guidage (5), et
au moins une surface s'opposant au stator (43a, 43b) est formée en douceur et la surface s'opposant au stator (43a, 43b) est en parallèle avec une surface des premières dents de pôle magnétique (22, 32), la surface des premières dents de pôle magnétique (22, 32) s'opposant à l'élément mobile (4),
les surfaces de fixation de partie guidée (43c) sont parallèles aux surfaces s'opposant au stator (43a et 43b) ou sur un plan identique, et perpendiculaires à la direction s'opposant au stator (2, 3),
les surfaces de fixation de partie guidée (43c) sont agencées perpendiculairement à la direction s'opposant de l'élément mobile (4) et du stator (3),
les parties guidées (44) et les surfaces de fixation de partie guidée (43c) sont agencées perpendiculairement à la direction de déplacement (A) de l'élément mobile (4).

2. Moteur linéaire (L) selon la revendication 1, dans lequel toutes les surfaces de fixation de partie guidée (43c) sont formées sur un plan identique.

3. Moteur linéaire (L) selon la revendication 2, dans lequel les surfaces s'opposant au stator (43a, 43b) sont formées sur le même plan comme toutes les surfaces de fixation de partie guidée (43c).

4. Moteur linéaire (L) selon l'une quelconque des revendications 1 à 3, dans lequel, dans la partie guidée (44), des surfaces dans les parties guidées (44) mises en contact avec la surface de fixation de partie guidée (43c) et les surfaces de fixation de partie guidée (43c) sont formées en douceur.

5. Moteur linéaire (L) selon l'une quelconque des revendications 1 à 4, dans lequel, dans le compartiment (43), une partie de rétrécissement (433) est formée à un site ne contribuant pas au stockage du support (42) et ne contribuant pas à la fixation de la partie guidée (44).

6. Moteur linéaire (L) selon l'une quelconque des revendications 1 à 5, dans lequel l'élément mobile (4) est disposé à une position étant en interposition entre deux morceaux des stators (2, 3) dans une direction de l'épaisseur avec des écarts prescrits.

7. Moteur linéaire (L) selon la revendication 6, dans lequel les deux morceaux des stators (2, 3) sont un stator supérieur (2) et un stator inférieur (3).

8. Moteur linéaire (L) selon l'une quelconque des revendications 1 à 7, dans lequel, dans le support (42), un trou de support (421) maintenant les secondes dents de pôle magnétique (41) sans aucun jour et pénétrant dans une direction de l'épaisseur et un trou de rétrécissement creux (422) sont formés alternativement le long de la direction de déplacement (A), et
dans le support (42), une partie de frontière (423) entre le trou de support (421) et le trou de rétrécissement (422), ou un autre trou de support (421) adjacent au trou de support (421) dans la direction de déplacement (A), peut fonctionner en tant que partie de positionnement dans la direction de déplacement (A) des secondes dents de pôle magnétique (41), maintenue par le trou de support (421).

9. Moteur linéaire (L) selon l'une quelconque des revendications 1 à 8, dans lequel le trou de rétrécissement (422) est un trou pénétrant dans le support (42) dans une direction de l'épaisseur.

10. Moteur linéaire (L) selon l'une quelconque des revendications 1 à 9, dans lequel, sur le côté sur lequel sont fixées les parties guidées (44) du compartiment (43), la surface s'opposant au stator (43b) est agencée entre les surfaces de fixation de partie guidée (43c) dans la direction perpendiculaire à la direction de déplacement (A) de l'élément mobile (4).
